# EUROPÄISCHE PATENTSCHRIFT

(11) **EP 2 599 658 B1**
(45) Veröffentlichungstag und Bekanntmachung des Hinweises auf die Patenterteilung: **21.12.2016**
(21) Anmeldenummer: 12193448.3
(22) Anmeldetag: 20.11.2012
(51) Int. Cl.: B60N 2/22, B60N 2/48, B60N 2/38, B60N 2/28, B60N 2/46

(54) **Fahrzeugsitz mit seitlichem Stützelement**
Vehicle seat with side support element
Siège de véhicule avec élément de soutien latéral

(30) Priorität: 30.11.2011 DE 102011055895
(43) Veröffentlichungstag der Anmeldung: 05.06.2013
(73) Patentinhaber: GRAMMER AG, 92224 Amberg (DE)
(72) Erfinder: Bühlmeyer, Katja, 92281 Königstein (DE); Haller, Erwin, 92262 Birgland (DE); Kolb, Jens, 92281 Königstein (DE); Übelacker, Roland, 92536 Pfreimd (DE); Erker, Christian, 92681 Erbendorf (DE)
(74) Vertreter: Hannke, Christian

(56) Entgegenhaltungen:
- DE-A1- 3 046 049
- FR-A1- 2 812 594
- FR-A1- 2 884 774
- GB-A- 2 472 836

## Beschreibung

Die Erfindung betrifft einerseits einen Fahrzeugsitz mit einem Sitzteil und mit einem Rückenlehnenteil zum Stützen eines Fahrzeugführers in seiner Sitzposition auf dem Fahrzeugsitz.

Andererseits betrifft die Erfindung ein Nutzfahrzeug, insbesondere ein landwirtschaftliches Nutzfahrzeug, mit einem Fahrzeugsitz.

Des Weiteren betrifft die Erfindung ein Verfahren zum Unterstützen eines Fahrgastes auf einem Fahrzeugsitz mit einem Sitzteil und mit einem Rückenlehnenteil während einer temporär eingenommenen Fahrarbeitsposition, bei welcher der Fahrgast eine seitlich oder rückwärtig ausgerichtete Sitzhaltung einnimmt bzw. eingenommen hat.

Gattungsgemäße Fahrzeugsitze insbesondere für Nutzfahrzeuge und speziell für landwirtschaftliche Nutzfahrzeuge sind aus dem Stand der Technik vielfältig und gut bekannt.

GB 2 472 836 A offenbart eine konkave Kopfstütze, die der Rückenlehne vorgelagert ist, für den Einsatz in Fahrzeugen und Passagierflugzeugen. Diese ist über eine Haltevorrichtung beweglich an der Rückenlehne befestigt, so dass jeweils eine ihrer beiden Seitenteile im Verhältnis zum Sitz nach vorn bewegt werden kann. Ebenfalls kann sie bezogen auf den Sitz nach oben und unten verschoben werden, um sich der Sitzneigung und/oder der Größe der sitzenden Person anzupassen. Die Kopfstütze soll dazu dienen, im Ruhe- bzw. Schlafzustand den Kopf anzulehnen sowie bei Unfällen durch die zusätzliche Stützfunktion Verletzungen zu vermeiden.

Bei dem Gegenstand der FR 2 884 774 A1 handelt es sich ebenfalls um eine Kopfstütze. Diese wird auf das Rückenteil aufgesteckt und verfügt über ein bewegliches Element. Dieses bewegliche Element kann je nach Ausführungsform entweder vor oder hinter dem festen Teils der Kopfstütze angeordnet sein. Es kann auf einer Kombination aus einer Art Pins und Nuten seitlich aus der Kopfstütze bewegt werden. Bei dem vor dem festen Teil der Kopfstütze angeordneten beweglichen Teil sorgen elastische Scharniere bei einer Ausführungsvariante dafür, dass das bewegliche Teil, sobald es weit genug herausbewegt wurde, abgeknickt werden kann. So sollen Kopf- und Nackenbereich, während Schlaf- und Ruhephasen seitlich gestützt werden.

Bei FR 2 812 594 handelt es sich um einen Sitz mit zwei ausklappbaren seitlichen Stützen. Bei den Stützen handelt sich um eine Art Arme, die um eine parallel zur Rückenlehne befindlichen horizontalen Achse in eine waagerechte Position geschwenkt werden können. In der inaktiven Position sind sie in der Rückenlehne integriert. Sie sind zur Stütze des Nackens und des Kopfes während einer Schlaf- bzw. Ruheposition gedacht.

Insbesondere Fahrzeugführer von landwirtschaftlichen Nutzfahrzeugen nehmen bei ihrer Arbeit mit diesen landwirtschaftlichen Nutzfahrzeugen und daran angehängten Arbeitsgeräten oftmals über einen längeren Zeitraum eine von der normalen nach vorne in Fahrrichtung gerichteten Fahrsitzhaltung eine seitlich oder rückwärtig ausgerichtete Sitzarbeitshaltung ein, um beispielsweise hinten in der Fahrzeugkabine angeordnete Bedienelemente besser erreichen und bedienen zu können, oder auch um ein hinter dem landwirtschaftlichen Nutzfahrzeug angehängtes Arbeitsgerät für einen längeren Zeitraum gut zu beobachten.

Derzeit können Fahrzeugführer den gesamten Fahrzeugsitz, also die im Wesentlichen gesamte starre Sitzkonstruktion mitsamt dem Sitzteil und dem Rückenlehnenteil, mit Hilfe eines Drehadapters um eine definierte Drehhochachse schwenken. Dabei bleibt das Sitzteil in Relation zum Rückenlehnenteil fest stehen. Dies führt zum einen dazu, dass der Fahrzeugführer sich aus einer komfortablen Sitzpolsterkontur des Fahrzeugsitzes herausdrehen muss, um insbesondere die Pedalerie des landwirtschaftlichen Nutzfahrzeugs weiter einigermaßen gut betätigen zu können. Dies kann zu Druckstellen und damit zu Diskomfort speziell im Gesäß- und Oberschenkelbereich des Fahrzeugführers führen.

Etwaige Anbauteile am Fahrzeugsitz, beispielsweise eine Multifunktionsarmlehne, drehen sich ebenso in Relation dazu mit. Bedienhebel, die weiter hinten seitlich angeordnet sind, können dadurch immer noch nicht komfortabel betätigt werden.

Die Rückenpolsterkontur ist aktuell derart ausgeformt, dass der Fahrzeugführer in der vorwärts gerichteten Fahrsitzhaltung maximal möglich gestützt wird, ohne ihm die notwendigen Freiheitsgrade zu nehmen, die er für seine Bewegungen im Fahrbetrieb benötigt. Um eine Bewegungsfreiheit im Schulter-Armbereich nicht zu behindern, darf das Rückenpolster des Rückenlehnenteils im oberen Bereich nicht zu stark konturiert sein. Um jedoch eine gute Abstützung und damit eine ausreichend gute Entlastung des Fahrführers zu gewährleisten, sollte die Abstützungsfläche in allen Fahrpositionen jedoch möglichst groß sein. Dies kann aus den vorher genannten Gründen, wie etwa die erforderlichen Freiheitsgrade für eine gute Bewegung, aktuell nur bedingt erzielt werden.

Ein weiterer Nachteil besteht darin, dass der Schwenkbereich des Drehadapters dadurch limitiert ist, dass das Nutzfahrzeug trotz der Beobachtung der hinteren Arbeitsgeräte weiter über die Pedalerie und das Lenkrad verkehrssicher gesteuert werden muss. Um diesen Ansprüchen gerecht zu werden, muss der Fahrzeugführer eine Zwangshaltung einnehmen, welche unweigerlich zu einer Torsion des gesamten Körpers führt. Wissenschaftliche Untersuchungen zeigen, dass eine derart verdrehte Zwangshaltung insbesondere unter Schwingungsbelastung zur Schädigung der Körperstrukturen führen kann, speziell wenn der Körper nicht ausreichend gut unterstützt wird. Zudem steht fest, dass man die Belastung der Wirbelsäule durch eine gute Abstützung über das Rückenlehnenteil signifikant reduzieren kann.

Es ist Aufgabe der Erfindung, einem Fahrzeugführer einen verbesserten Sitzkomfort und eine signifikante Entlastung der Körperstrukturen zu bieten, um speziell ein landwirtschaftliches Nutzfahrzeug betriebssicherer und insbesondere verkehrssicherer führen zu können.

Die Aufgabe der Erfindung wird zum einen von einem Fahrzeugsitz mit einem Sitzteil und mit einem Rückenlehnenteil zum Stützen eines Fahrzeugführers in seiner Sitzposition auf dem Fahrzeugsitz gelöst, wobei sich der Fahrzeugsitz durch eine außerhalb des Sitzteils und des Rückenlehnenteils anordenbare zusätzliche Fahrzeugführerrumpfabstützeinrichtung auszeichnet, welche zumindest teilweise in einem ansonsten fahrzeugsitzfreien Rumpfabstützbereich in Höhe eines oberen Rückenlehnenteildrittels oder oberhalb hiervon vor dem Rückenlehnenteil und außermittig seitlich am Rückenlehnenteil temporär anordenbar ist, um den auf dem Fahrzeugsitz sitzenden Fahrzeugführer während einer seitlich oder rückwärtig ausgerichteten Sitzarbeitshaltung zumindest in Höhe seines Schulter- und/oder Brustkorbbereichs außermittig seitlich des Rückenlehnenteils abzustützen, wobei die zusätzliche Fahrzeugführerrumpfabstützeinrichtung mit einer Verlagerungseinrichtung von einer Parkposition in eine zusätzliche Rumpfabstützlage in dem ansonsten fahrzeugsitzfreien Rumpfabstützbereich translatorisch entlang einer Kurveneinrichtung verlagerbar angeordnet ist.

Besonders stabil kann die zusätzliche Fahrzeugführerrumpfabstützeinrichtung von der Parkposition in die zusätzliche Rumpfabstützlage gemäß dieser Ausführungsform hinein verlagert werden, wenn die Verlagerungseinrichtung Mittel zum rotatorischen und translatorischen Verlagern der zusätzlichen Fahrzeugführerrumpfabstützeinrichtung aufweist.

Zum anderen wird die Aufgabe gelöst von einem Fahrzeugsitz mit einem Sitzteil und mit einem Rückenlehnenteil zum Stützen eines Fahrzeugführers in seiner Sitzposition auf dem Fahrzeugsitz, wobei eine außerhalb des Sitzteils und des Rückenlehnenteils anordenbare zusätzliche Fahrzeugführerrumpfabstützeinrichtung, welche zumindest teilweise in einem ansonsten fahrzeugsitzfreien Rumpfabstützbereich oberhalb eines oberen Rückenlehnenteildrittels vor dem Rückenlehenenteil und seitlich des Rückenlehenteils temporär anordenbar ist, um den auf dem Fahrzeugsitz sitzenden Fahrzeugführer während einer seitlich oder rückwärtig ausgerichteten Sitzarbeitshaltung zumindest in Höhe seines Schulter- und/oder Brustkorbbereichs außermittig seitlich des Rückenlehnenteils abzustützen, wobei die zusätzliche Fahrzeugführerrumpfabstützung mit einer Verlagerungseinrichtung von einer Parkposition in eine zusätzliche Rumpfabstützlage in dem ansonsten fahrzeugsitzfreien Rumpfabstützbereich verlagerbar angeordnet ist, wobei die Fahrzeugführerrumpfabstützeinrichtung schwenkbar um eine Hochachse gegenüber dem Rückenlehnenteil gelagert ist.

Weiter wird die Aufgabe gelöst von einem Fahrzeugsitz mit einem Sitzteil und mit einem Rückenlehnenteil zum Stützen eines Fahrzeugführers in seiner Sitzposition auf dem Fahrzeugsitz, wobei eine außerhalb des Sitzteils und des Rückenlehnenteils anordenbare zusätzliche Fahrzeugführerrumpfabstützeinrichtung mit zwei klappbaren Flügelelementen, welche zumindest teilweise in einem ansonsten fahrzeugsitzfreien Rumpfabstützbereich oberhalb eines oberen Rückenlehnenteildrittels vor dem Rückenlehenenteil temporär anordenbar sind, um den auf dem Fahrzeugsitz sitzenden Fahrzeugführer während einer seitlich oder rückwärtig ausgerichteten Sitzarbeitshaltung zumindest in Höhe seines Schulter- und/oder Brustkorbbereichs außermittig seitlich des Rückenlehnenteils abzustützen, wobei die Flügelelemente in einem Normalabstützungsbetriebszustand des Fahrzeugsitzes mit einem Mittelelement einer Rückenlehenverlängerungseinrichtung fluchten, wobei sie in einem Sonderabstützbetriebszustand des Fahrzeugsitzes von diesem in unterschiedlicher Weise abgeklappt sind.

Darüber hinaus wird die Aufgabe gelöst von einem Fahrzeugsitz mit einem Sitzteil und mit einem Rückenlehnenteil zum Stützen eines Fahrzeugführers in seiner Sitzposition auf dem Fahrzeugsitz, wobei eine außerhalb des Sitzteils und des Rückenlehnenteils anordenbare zusätzliche Fahrzeugführerrumpfabstützeinrichtung, welche zumindest teilweise in einem ansonsten fahrzeugsitzfreien Rumpfabstützbereich in Höhe eines oberen Rückenlehnenteildrittels oder oberhalb hiervon vor dem Rückenlehnenteil und außermittig seitlich am Rückenlehnenteil temporär anordenbar ist, um den auf dem Fahrzeugsitz sitzenden Fahrzeugführer während einer seitlich oder rückwärtig ausgerichteten Sitzarbeitshaltung zumindest in Höhe seines Schulter- und/oder Brustkorbbereichs außermittig seitlich des Rückenlehnenteils abzustützen, wobei die zusätzliche Fahrzeugführerrumpfabstützeinrichtung mit einer Verlagerungseinrichtung von einer Parkposition in eine zusätzliche Rumpfabstützlage in dem ansonsten fahrzeugsitzfreien Rumpfabstützbereich translatorisch entlang einer Verschiebeeinrichtung verlagerbar angeordnet ist.

Vorteilhafter Weise kann durch die derart angeordnete zusätzliche Fahrzeugführerrumpfabstützeinrichtung der Fahrzeugführer während einer Zwangshaltungseinnahme, insbesondere der vorstehend beschrieben seitlich oder rückwärtig ausgerichteten Sitzarbeitsstellung, außerordentlich gut entlastet werden. Und vorzugsweise zwar nur dann, wenn es erforderlich ist, steht die zusätzliche Fahrzeugführerrumpfabstützeinrichtung zur Verfügung. Ansonsten, etwa in einer vorwärts ausgerichteten Fahrposition, stört die zusätzliche Fahrzeugführerrumpfabstützeinrichtung nicht, da sie in ihrer Ruhelage bzw. angestammten Parkposition verbleibt.

Vorteilhaft ist die zusätzliche Fahrzeugführerrumpfabstützeinrichtung derart anordenbar, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außermittig seitlich des Rückenlehnenteils abgestützt ist.

Der Begriff "zusätzliche Fahrzeugführerrumpfabstützeinrichtung" beschreibt im Sinne der Erfindung eine Einrichtung zur zusätzlichen Rumpfabstützung des Fahrzeugführers während einer Zwangshaltung am Fahrzeugsitz.

In vorliegendem Zusammenhang beschreibt die Begrifflichkeit "Rumpf" anatomisch den zentralen Bereich eines menschlichen Körpers und der Rumpf umfasst den Brustkorb, den Bauch, den Rücken sowie das Becken des menschlichen Körpers.

Insofern kann sie kumulativ insbesondere von einer Armlehneneinrichtung ergänzt werden, an welcher sich der Fahrzeugführer während einer Zwangshaltung natürlich auch irgendwie abstützen könnte. Jedoch kann eine Abstützung an einer Armlehneneinrichtung nur im Beckenbereich des Fahrzeugführers erfolgen. Dies ist jedoch für einen längeren Zeitraum nicht bequem und außerdem ergonomisch unzureichend. Um eine signifikante Entlastung der Körperstrukturen zu erwirken, muss eine zur Verfügung stehende Anlagefläche über die der aktuell vorhandenen Armlehneneinrichtungen hinaus gehen.

Insofern ist es vorteilhaft, wenn die zusätzliche Fahrzeugführerrumpfabstützeinrichtung eine Anlagefläche für einen Rücken- und/oder Schulterbereich eines Fahrzeugführers umfasst, wobei die Anlagefläche vorteilhafter Weise ergonomisch geformt ist, um der menschlichen Körperanatomie besonders gut zu entsprechen. Erst dies fördert die Akzeptanz beim Fahrzeugführer eine derartige zusätzliche Rumpfabstützung häufig zu gebrauchen. Zumal ist der Körper des Fahrzeugführers durch eine derartige Anlagefläche vor Verletzungen gut geschützt, da es speziell im Einsatz mit landwirtschaftlichen Nutzfahrzeugen im Arbeitsbetrieb auf dem Acker oftmals sehr rau zugeht und der Fahrzeugführer hierbei für jede gezielte Rumpfabstützung dankbar ist.

Die zusätzliche Fahrzeugführerrumpfabstützeinrichtung kann an einem nahezu beliebigen Ort in einer Fahrzeugkabine angeordnet bzw. befestigt sein. Bevorzugt ist sie direkt an dem Fahrzeugsitz angeordnet, wie beispielsweise an einer festen Grund- und Tragestruktur, einem Sitzteil oder einem Rückenlehnenteil des jeweiligen Fahrzeugsitzes.

Mit dem Begriff "fahrzeugsitzfreier Rumpfabstützbereich" ist im Sinne der Erfindung ein Bereich am Fahrzeugsitz beschrieben, in welchem permanente Abstützeinrichtungen des Fahrzeugsitzes nicht sinnvoll dauerhaft angeordnet sein können, da sie im normalen Fahrbetrieb zu sehr störend auf den Fahrzeugführer wirken würden. Der vorliegende fahrzeugsitzfreie Rumpfabstützbereich liegt hierbei einerseits im Wesentlichen im oberen Drittel des Rückenlehnenteils, also oberhalb der halben Höhe des Rückenlehnenteils und damit im unmittelbaren Sichtbereich seitlichen bzw. rückwärtigen Sichtbereich des Fahrzeugführers. Er kann auch oberhalb des oberen Drittels liegen. Allein deshalb ist dieser fahrzeugsitzfreie Rumpfabstützbereich zumindest im normalen Vorwärtsfahrbetrieb unbedingt freizuhalten. Demnach ist er nicht mit einem herkömmlichen Abstützbereich zu verwechseln, in welchem eine Armlehneneinrichtung temporär hineingeschwenkt werden kann, auf welcher der Fahrzeugführer dann den Arm zur Entlastung ablegen kann. Andererseits befindet sich der fahrzeugsitzfreie Rumpfabstützbereich im Sinne der Erfindung außermittig des Rückenlehnenteils. Allein hierdurch ist er nicht mit einem herkömmlichen Abstützbereich zu verwechseln, in welchem eine Kopfstützeneinrichtung platziert ist. Erst recht nicht, da der fahrzeugsitzfreie Rumpfabstützbereich zudem vor dem Rückenlehnenteil und seitlich hiervon angeordnet ist. Insofern ist der vorliegende fahrzeugsitzfreie Rumpfabstützbereich auch seitlich und oberhalb des Sitzteils des Fahrzeugsitzes vorgesehen.

Die Beschreibung "seitlich oder rückwärtig ausgerichteten Sitzarbeitshaltung" formuliert vorliegend eine Zwangshaltung des Fahrzeugführers bezüglich einer Oberkörperdrehung, um hierbei einen rückseitigen Arbeitsbereich insbesondere hinter dem landwirtschaftlichen Nutzfahrzeug besser beobachten zu können.

An dieser Stelle sei darauf hingewiesen, dass die vorliegenden erfinderischen Ausführungsformen von Fahrzeugsitzen nicht nur hinsichtlich eines Fahrzeugführers vorteilhaft eingesetzt werden kann. Vielmehr sind die erfindungsgemäßen Fahrzeugsitze nahezu in jedem Anwendungsbereich einsetzbar, in welchem im Umfeld des Fahrzeugsitzes zumindest temporär eine zusätzliche Rumpfabstützeinrichtung bereitgestellt werden soll.

Die Aufgabe der Erfindung wird auch von einem Verfahren zum Unterstützen eines Fahrzeugführers auf einem der erfindungsgemäßen Fahrzeugsitze mit einem Sitzteil und mit einem Rückenlehnenteil während einer temporär eingenommenen Fahrarbeitsposition gelöst, bei welcher der Fahrzeugführer eine seitlich oder rückwärtig ausgerichtete Sitzhaltung einnimmt bzw. eingenommen hat, bei welchem temporär eine zusätzliche Fahrzeugführerrumpfabstützeinrichtung in die Nähe des Fahrzeugsitzes verlagert wird, um den Fahrzeugführer während seiner seitlich oder rückwärtig ausgerichteten Sitzhaltung zumindest in Höhe seines Schulter- und/oder Brustkorbbereichs seitlich des Rückenlehnenteils abzustützen, und bei welchem hierfür die zusätzliche Fahrzeugführerrumpfabstützeinrichtung aus einer Parkposition heraus in einen ansonsten fahrzeugsitzfreien Rumpfabstützbereich vor dem Rückenlehnenteil und/oder seitlich des Rückenlehnenteils und in Höhe eines oberen Rückenlehnenteildrittels oder oberhalb hiervon hinein verlagert wird.

Vorteilhafter Weise kann die zusätzliche Fahrzeugführerrumpfabstützeinrichtung lediglich bedarfsweise und temporär am Fahrzeugsitz bereitgestellt werden, so dass das Umfeld des Fahrzeugsitzes durch zusätzliche Einrichtungen nicht verbaut ist, wenn diese nicht gebraucht werden.

Die zusätzliche Fahrzeugführerrumpfabstützeinrichtung kann besonders leicht verwendet werden, wenn sie mittels einer Druckbetätigungseinrichtung an einem Polsterteil des Rückenlehnenteils betätigbar an dem Rückenlehnenteil angeordnet ist. Hierdurch kann die zusätzliche Fahrzeugführerrumpfabstützeinrichtung automatisch der Bewegung des Fahrzeugführers folgen, wodurch der Fahrzeugführer in seiner Aufgabenvielfalt besonders gut entlastet werden kann, da er kein zusätzliches Bedienelement betätigen muss.

Eine vorteilhafte Weiterbildung der vorliegenden Erfindung kann erzielt werden, wenn das Sitzteil, das Rückenlehnenteil und ein Kopfstützenteil eine Hauptaußenkontur des Fahrzeugsitzes ausgestalten, und die zusätzliche Fahrzeugführerrumpfabstützeinrichtung temporär außerhalb der Hauptaußenkontur anordenbar an dem Rückenlehnenteil gehaltert ist.

Vorteilhafter Weise kann die zusätzliche Fahrzeugführerrumpfabstützeinrichtung bei einem Nichtgebrauch hinter der Hauptaußenkontur zurückliegen oder diese mit begrenzen und ausgestalten, so dass sie speziell im normalen Vorwärtsfahrbetrieb, in welchem der Fahrzeugführer eine vorwärts ausgerichtete Fahrposition einnimmt, im Umfeld des Sitzbereiches bzw. des Fahrzeugsitzes nicht stört. Insofern wird auch eine Rundumsicht am landwirtschaftlichen Nutzfahrzeug nicht negativ beeinträchtig, was hinsichtlich der Verkehrssicherheit, aber auch der Arbeitssicherheit von erheblicher Bedeutung ist, da hierdurch Unfälle mit sich im Arbeitsradius des landwirtschaftlichen Nutzfahrzeugs aufhaltenden Personen verhindert werden können.

Allein schon aufgrund der vorstehend genannten Vorteile wird die Aufgabe der Erfindung auch von einem Nutzfahrzeug, insbesondere von einem landwirtschaftlichen Nutzfahrzeug, gelöst, welches sich durch einen Fahrzeugsitz für einen Fahrzeugführer nach einem der vorliegend beschriebenen Merkmale auszeichnet. Durch ein mit dem erfindungsgemäßen Fahrzeugsitz ausgerüstetes insbesondere landwirtschaftliches Nutzfahrzeug wird ein Fahrzeugführer hinsichtlich seiner Gesundheit wesentlich besser unterstützt bzw. geschützt als es bisher möglich ist.

Darüber hinaus sieht eine besonders vorteilhafte Ausführungsvariante vor, dass der Fahrzeugsitz neben einem Normalabstützbetriebszustand mindestens einen Sonderabstützbetriebszustand aufweist, in welchem die zusätzliche Fahrzeugführerrumpfabstützeinrichtung vor dem Rückenlehnenteil und einen oberhalb und/oder seitlich des Sitzteils liegenden Fahrzeugführerbewegungsfreiraum temporär begrenzend anordenbar ist.

Durch den begrenzten Fahrzeugführerbewegungsfreiraum kann im Sinne der Erfindung temporär eine vorteilhafte zusätzliche Fahrzeugführerrumpfabstützung bereitgestellt werden, um den Fahrzeugführer hinsichtlich einer eingenommenen Zwangshaltung vorteilhaft zu entlasten.

Die Begrifflichkeit "Normalabstützbetriebszustand" beschreibt im Sinne der Erfindung einen Betriebszustand am Fahrzeugsitz, in welchem die zusätzliche Fahrzeugführerrumpfabstützeinrichtung inaktiv ist und deshalb zur zusätzlichen Rumpfabstützung im ansonsten fahrzeugsitzfreien Abstützbereich nicht zur Verfügung steht.

Mit der Begrifflichkeit "Sonderabstützbetriebszustand" ist vorliegend ein vom Normalabstützbetriebszustand abweichender weiterer Betriebszustand am Fahrzeugsitz beschrieben, in welchem die zusätzliche Fahrzeugführerrumpfabstützeinrichtung aktiv ist, dass heißt, in welchem sie in dem ansonsten fahrzeugsitzfreien Abstützbereich angeordnet ist und für eine zusätzliche Körperrumpfabstützung zur Verfügung steht.

Es versteht sich, dass die zusätzliche Fahrzeugführerrumpfabstützeinrichtung an unterschiedlichen Befestigungsorten in einer Fahrzeugkabine insbesondere eines landwirtschaftlichen Nutzfahrzeugs befestigt sein kann. Damit der umliegende Kabinenbereich durch die zusätzliche Fahrzeugführerrumpfabstützeinrichtung jedoch nicht verbaut ist, ist es besonders vorteilhaft, wenn die zusätzliche Fahrzeugführerrumpfabstützeinrichtung an dem Rückenlehnenteil angeordnet ist.

Ist die zusätzliche Fahrzeugführerrumpfabstützeinrichtung körperhaltungsabhängig interaktiv betätigbar angeordnet, kann sie außerordentlich einfach aktiviert werden, ohne dass der Fahrzeugführer händisch Bedienelemente zum Aktivieren der zusätzlichen Fahrzeugführerrumpfabstützeinrichtung betätigen muss.

Vorliegend beschreibt der Begriff "körperhaltungsabhängig" die vorteilhafte Aktivierung bzw. Betätigung der zusätzlichen Fahrzeugführerrumpfabstützeinrichtung durch einfache Verlagerung des Körpers im Fahrzeugsitz bzw. in den dessen Polsterteilen.

Beispielsweise zum Auslösen von Drucksensoren, welche etwa innerhalb des Rückenlehnenteils eine Druckbelastung bzw. eine Druckbelastungsveränderung auf den Fahrzeugsitz durch den Fahrzeugführer detektieren. Bei einem bestimmten Druckmuster kann dann die zusätzliche Fahrzeugführerrumpfabstützeinrichtung aktiviert und von einer Parkposition in den ansonsten fahrzeugsitzfreien Rumpfabstützbereich hinein verlagert werden.

Insofern sieht eine weitere vorteilhafte Ausführungsvariante vor, dass der Fahrzeugsitz an dem Rückenlehnenteil eine fahrzeugführerhaltungsabhängige interaktive Betätigungseinrichtung aufweist, wobei die zusätzliche Fahrzeugführerrumpfabstützeinrichtung mittels einer Druckbetätigungseinrichtung an einem Polsterteil des Rückenlehnenteils betätigbar an dem Rückenlehnenteil angeordnet ist.

Vorteilhafter Weise kann eine Körperhaltung oder eine Körperhaltungsveränderung kumulativ oder alternativ auch mit einer Fahrzeugsitzumfelderkennung überwacht werden, um dann bei einem bestimmten Verhaltensmuster eine bevorstehende Körperhaltungsveränderung zu antizipieren und eine Aktivierung der zusätzlichen Fahrzeugführerrumpfabstützeinrichtung frühzeitig einzuleiten.

Es versteht sich, dass für eine derartige interaktive Betätigung noch viele weitere technische Umsetzungsmöglichkeiten heran gezogen werden können.

Beispielsweise kann eine Erfassung der Körperposition auch anhand eines vorzugsweise Kraftsensors oder eines kapazitativen Sensors oder anders arbeitender Sensoren erfolgen, die eine Haltungsänderung des Fahrzeugführers gut detektieren können. Sobald das System die Haltungsänderung erkennt, verändert der Fahrzeugsitz im Sinne der Erfindung seine Unterstützungsflächen.

Es versteht sich des Weiteren, dass eine Verlagerung der zusätzlichen Fahrzeugführerrumpfabstützeinrichtung mechanisch, hydraulisch, pneumatisch oder auch mittels Elektromotoren erfolgen kann, je nachdem welche technischen Voraussetzungen an dem jeweiligen Nutzfahrzeug zur Verfügung stehen.

Insofern sieht eine bevorzugte Verfahrensvariante auch vor, dass die zusätzliche Fahrzeugführerrumpfabstützeinrichtung in Abhängigkeit einer Fahrzeugführerkörperhaltung automatisiert in den Rumpfabstützbereich hinein verlagert wird. Hierdurch kann vorteilhafter Weise zur Gänze ausgeschlossen werden, dass der Fahrzeugführer durch eine Bedienung einer Betätigungseinrichtung der zusätzlichen Fahrzeugführerrumpfabstützeinrichtung unnötig von seiner Arbeit abgelenkt wird.

Darüber hinaus sei der Vollständigkeit halber an dieser Stelle noch erwähnt, dass alternativ eine Aktivierung der zusätzlichen Fahrzeugführerrumpfabstützeinrichtung auch manuell eingeleitet werden kann, indem in der Tat hierfür eine Bedieneinrichtung ausnahmslos oder alternativ händisch betätigt werden kann.

Es versteht sich, dass die zusätzliche Fahrzeugführerrumpfabstützeinrichtung konstruktiv vielfältig in die Realität umgesetzt werden kann. Es hat sich jedoch bisher gezeigt, dass es besonders vorteilhaft ist, wenn die zusätzliche Fahrzeugführerrumpfabstützeinrichtung mit Hilfe eines Bauteils oder eines Anbauteils des Rückenlehnenteils verwirklicht ist.

Vorteilhafter Weise können speziell gestaltete Bereiche des Rückenlehnenteils als die zusätzliche Fahrzeugführerrumpfabstützeinrichtung verwendet werden.

Der Begriff "Rückenlehnenverlängerungseinrichtung" beschreibt im Sinne der Erfindung einen oberen Teil des Rückenlehnenteils, mittels welchem der Fahrzeugführer im Wesentlichen im Bereich seines Rumpfes gestützt werden kann.

Auch eine nicht beanspruchte Armlehneneinrichtung kann mit einer Anlagefläche vorteilhaft ausgerüstet werden und somit konstruktiv sehr einfach eine zusätzliche Fahrzeugführerrumpfabstützeinrichtung bereitstellen.

Insbesondere kann mittels der vorliegenden Erfindung ein Fahrzeug- oder Passagiersitz mit einem variabel anpassbaren Rückenpolsterteil bereitgestellt werden, um mehrere Fahrzeugführerhaltepositionen vorteilhaft unterstützen zu können. Insofern ist es vorteilhaft, wenn die vorliegende zusätzliche Fahrzeugführerrumpfabstützeinrichtung ein integraler Bestanteil des Rückenlehnenteils ist.

Das Rückenpolsterteil zeichnet sich vorzugsweise dadurch aus, dass es mindestens zwei unterschiedliche Fahrpositionen unterstützt, nämlich erstens Geradeausfahrten und zweitens Fahrten mit verdrehtem Oberkörper, um zum Beispiel Anbaugeräte hinten am landwirtschaftlichen Nutzfahrzeug zu beobachten oder seitlich angeordnete Bedienelemente besser zu erreichen oder auch einfach nur um eine lockere und bequeme Sitzposition einzunehmen, ohne hierbei das Führen des landwirtschaftlichen Nutzfahrzeugs nachteilig zu beeinträchtigen, wie dies bisher häufig der Fall ist. Alle dazwischen liegenden Fahrzeugführersitzpositionen können natürlich auch mit der vorliegenden zusätzlichen Fahrzeugführerrumpfabstützeinrichtung vorteilhaft gestützt werden. Dies kann vorteilhaft etwa durch variabel verstellbare Elemente des Rückenpolsterteils, der Rückenlehnenverlängerungseinrichtung oder daran bzw. an dem Rückenlehnenteil angebaute Zusatzelemente gelöst werden, die sich zwischen den beiden Fahrpositionen derart bewegen und/oder verändern können, dass idealerweise eine maximale Unterstützung in allen Körperhaltungen des Fahrzeugführers erfolgt, ohne die jeweils andere Körperhaltung zu beeinträchtigen.

Die Erfindung zeichnet sich des Weiteren auch dadurch aus, dass sie zum einen den Nachteil des bisher verwendeten Drehadapters insbesondere hinsichtlich des ansonsten verdrehten Sitzpolsterteils verhindert. Das Sitzpolsterteil verbleibt vorzugsweise in seiner ursprünglich angestammten Position, dreht also nicht um eine Hochachse, und es kann somit das Gesäß bzw. den Unterkörper des Fahrzeugführers weiterhin optimal stützen. Gegebenenfalls kann eine geringe Schwenkbewegung des Fahrzeugsitzes bzw. des Sitzpolsterteils zugelassen werden, wenn dies erwünscht ist, um einen Verdrehungsgrad bzw. eine Torsion des Oberkörpers des Fahrzeugführers reduzieren zu können. Hierdurch kann die vorliegende Erfindung nochmals gut weiterentwickelt werden. Die Position des Fahrers zur Pedalerie und zum Lenkrad verändert sich vorteilhafter Weise aber auch hierbei kaum bzw. nur in einem vernachlässigbaren Maße. Insofern kann das landwirtschaftliche Nutzfahrzeug weiterhin sinnvoll und besonders verkehrssicher bedient und gelenkt werden. Es kommt, wie eingangs schon erwähnt, zu keinen Druckstellen oder nennenswerten Diskomfortempfindungen beim Fahrzeugführer aufgrund einer ungünstigen Verdrehung des Sitzpolsterteils unter dem Gesäß, wie es bisher oftmals der Fall ist. Da der Kontakt der Beine bzw. der Füße zur Pedalerie nahezu unverändert bestehen bleiben kann, kommt es zudem zu keiner kritischen Beeinträchtigung der Fahrzeugbedienung. Das Rückenlehnenteil, die Rückenverlängerungseinrichtung oder Zusatzelemente hiervon, welche eine funktionale Rückenunterstützung erfüllen, passen sich vorteilhafter Weise sowohl an die Anthropometrie als auch an die jeweilige Arbeitsaufgabe des Fahrerzeugführers bestens an. Durch die im Sinne der Erfindung vorgeschlagene zusätzliche Fahrzeugführerrumpfabstützeinrichtung können alle Fahrerpositionen optimal gestützt werden. Vor allem hinsichtlich der rückwärtig ausgerichteten Sitzarbeitshaltung kann eine nahezu optimale Rumpfabstützung des Oberkörpers des Fahrzeugführers insbesondere aufgrund einer beispielsweise seitlich einschwenkbaren Rückenverlängerungseinrichtung erzielt werden.

Eine alternative Rumpfabstützung kann idealerweise mit einer nicht beanspruchten komfortoptimierten linken Armlehneneinrichtung erfolgen, die auf ihrer Innenseite, also eine dem Fahrzeugführer zugewandten Seite, eine zusätzliche Kontur bzw. Anlagefläche aufweist, die an die Anthropometrie des Fahrerzeugführers angepasst ist. Dadurch kann in allen wesentlichen Fahrpositionen eine nahezu maximale Unterstützungsfläche zum zusätzlichen Rumpfabstützen des Fahrzeugführers erreicht werden. Hierdurch verringert sich die Belastung des Fahrzeugführers signifikant. Da der Körper selbst in Zwangspositionen wesentlich besser gestützt werden kann, erhält der Fahrzeugführer seine Leistungsfähigkeit über einen nicht unerheblich längeren Zeitraum aufrecht. Zudem weiß man, dass eine maximale Rumpfabstützung des Körpers über das Rückenpolster die Belastung auf die Wirbelsäule vorteilhaft reduziert. Weiterhin verhindert eine gute Rumpfabstützung einen Kontrollverlust des Fahrzeugs aufgrund fehlender Unterstützungsflächen für einen Fahrzeugführer. Dem Fahrzeugführer wird darüber hinaus vorteilhafter Weise die Möglichkeit gegeben, unterschiedliche und sinnvoll unterstützte Körperhaltungen besonders leicht und bequem einzunehmen, was eine wesentliche Voraussetzung für ein langes Fahren ohne übermäßigen Abfall der Leistungsfähigkeit ist und überdies eine Gesundheitsgefährdung bei langandauernden Arbeiten unter einer Zwangshaltung reduziert.

Ein weiterer besonders wichtiger Vorteil der Erfindung liegt in einem außergewöhnlich nutzerfreundlichen Bedienkomfort. Eine automatische Anpassung des Fahrzeugsitzes an unterschiedliche Körperhaltungen ist außerordentlich wichtig, um den Fahrzeugführer insbesondere von ablenkenden Verstellaktionen hinsichtlich einer zuvorkommenden und bequemeren Fahrzeugsitzeinstellung während eines Fahrbetriebs zu entlasten. Denn gesunderhaltende Funktionen sollten möglichst automatisch erfolgen, da der Fahrzeugführer mit dem Erfüllen der einzelnen Fahraufgaben sowieso schon einer sehr hohen Bedienbelastung unterliegt. Verstellaktionen, welche nicht unmittelbar zur Fahraufgabe gehören bzw. unbedingt erforderlich sind, werden oft vernachlässigt und nicht oder zu spät vorgenommen.

Es versteht sich, dass es für die vorliegende Erfindung noch eine Vielzahl an unterschiedlichen Lösungsansätzen gibt. Wesentliche und vorteilhafte Ausführungsvarianten sind nachfolgend erläutert.

Weitere Vorteile, Ziele und Eigenschaften vorliegender Erfindung werden anhand anliegender Zeichnung und nachfolgender Beschreibung erläutert, in welchen beispielhaft einige Fahrzeugsitze mit ersten möglichen Ausgestaltungsvarianten bezüglich einer zusätzlichen Fahrzeugführerrumpfabstützeinrichtung dargestellt und beschrieben sind. In der Zeichnung zeigen:
- Figur 1A: schematisch eine perspektivische Ansicht eines sich in einem Normalabstützbetriebszustand befindlichen Fahrzeugsitzes mit einem Sitzteil, mit einem Rücklehnenteil und mit einer Armlehneneinrichtung, bei welchem ein oberes Polsterelement des Rückenlehnenteils eine verlagerbare zusätzliche Fahrzeugführerrumpfabstützeinrichtung umfasst;
- Figur 1B: schematisch eine weitere perspektivische Ansicht des Fahrzeugsitzes aus der Figur 1A in einem Sonderabstützbetriebszustand mit seitlich aus dem Rückenlehnenteil heraus verlagerter zusätzliche Fahrzeugführerrumpfabstützeinrichtung;
- Figur 2A: schematisch eine perspektivische Ansicht eines weiteren sich in einem Normalabstützbetriebszustand befindlichen, zur Erfindung nicht gehörenden Fahrzeugsitzes mit einem Sitzteil und mit einem hierzu seitlich verschwenkbaren Rücklehnenteil, bei welchem das gesamte Rückenlehnenteil eine verlagerbare zusätzliche Fahrzeugführerrumpfabstützeinrichtung ausgestaltet;
- Figur 2B: schematisch eine weitere perspektivische Ansicht des Fahrzeugsitzes aus der Figur 2A in einem Sonderabstützbetriebszustand mit seitlich aus dem Rückenlehnenteil heraus verlagerter zusätzlicher Fahrzeugführerrumpfabstützeinrichtung;
- Figur 3A: schematisch eine Vorderansicht eines sich in einem Normalabstützbetriebszustand befindlichen Fahrzeugsitzes mit einem Sitzteil, mit einem Rückenlehnenteil und mit einer eine oberseitig des Rückenlehnenteils angeordneten Rückenlehnenteilverlängerungseinrichtung umfassenden zusätzlichen Fahrzeugführerrumpfabstützeinrichtung;
- Figur 3B: schematisch eine weitere Vorderansicht des Fahrzeugsitzes in einem Sonderabstützbetriebszustand mit der in einem ansonsten fahrzeugsitzfreien Rumpfabstützbereich verlagerten zusätzlichen Fahrzeugführerrumpfabstützeinrichtung;
- Figur 3C: schematisch eine Aufsicht des Fahrzeugsitzes aus den Figuren 3A und 3B mit dargestelltem Verstellweg der zusätzlichen Fahrzeugführerrumpfabstützeinrichtung;
- Figur 4: schematisch eine Aufsicht einer weiteren zusätzlichen Fahrzeugführerrumpfabstützeinrichtung sowohl in einem Normalabstützbetriebszustand als auch in einem Sonderabstützbetriebszustand mit einer zusätzlichen anders gestalteten Anlagefläche eines ähnlichen, dennoch nicht zur Erfindung gehörenden Fahrzeugsitzes wie hinsichtlich der Figuren 3A bis 3C;
- Figur 5A: schematisch eine Aufsicht eines weiteren Fahrzeugsitzes mit einer als Fahrzeugführerrumpfabstützeinrichtung ausgestalteten alternativen Rückenverlängerungseinrichtung in einem Sonderabstützbetriebszustand des Fahrzeugsitzes;
- Figur 5B: schematisch eine Detailansicht der Rückenverlängerungseinrichtung in einem Normalabstützbetriebszustand des Fahrzeugsitzes aus der Figur 5A;
- Figur 6A: schematisch eine perspektivische Ansicht eines sich in einem Normalabstützbetriebszustand befindlichen Fahrzeugsitzes mit einer als zusätzliche Fahrzeugführerrumpfabstützeinrichtung ausgestalteten anderen Rückenverlängerungseinrichtung;
- Figur 6B: schematisch eine rückseitige Detailansicht der die zusätzliche Fahrzeugführerrumpfabstützeinrichtung umfassenden Rückenverlängerungseinrichtung aus der Figur 6A;
- Figur 6C: schematisch eine Vorderansicht des Fahrzeugsitzes aus den Figuren 6A und 6B in einem Sonderabstützbetriebszustand;
- Figur 6D: schematisch eine Rückansicht des Fahrzeugsitzes aus den Figuren 6A bis 6C in dem Sonderabstützbetriebszustand;
- Figur 7A: schematisch eine Aufsicht eines anderen sich in einem Normalabstützbetriebszustand befindlichen, nicht zur Erfindung gehörenden Fahrzeugsitzes mit einer seitlich an einem Rückenlehnenteil außen angeordneten schwenkbaren zusätzlichen Fahrzeugführerrumpfabstützeinrichtung;
- Figur 7B: schematisch eine Aufsicht des Fahrzeugsitzes aus der Figur 7A in einem Sonderabstützbetriebszustand mit der in einem ansonsten fahrzeugsitzfreien Rumpfabstützbereich verschwenkten zusätzlichen Fahrzeugführerrumpfabstützeinrichtung;
- Figur 8A: schematisch eine perspektivische Ansicht eines sich in einem Normalabstützbetriebszustand befindlichen, nicht zur Erfindung gehörenden Fahrzeugsitzes mit einer eine zusätzlichen Fahrzeugführerrumpfabstützeinrichtung umfassenden Armlehneneinrichtung;
- Figur 8B: schematisch eine nochmalige perspektivische Ansicht des Fahrzeugsitzes aus der Figur 8A in einem Sonderabstützbetriebszustand;
- Figur 9A: schematisch eine Seitenansicht eines nicht zur Erfindung gehörenden Fahrzeugsitzes mit einer seitlich an einem Rückenlehnenteil angeordneten und nach hinten verschwenkten zusätzlichen Fahrzeugführerrumpfabstützeinrichtung in einem Normalabstützbetriebszustand des Fahrzeugsitzes; und
- Figur 9B: schematisch eine weitere Seitenansicht des Fahrzeugsitzes aus der Figur 9A mit der in einen ansonsten fahrzeugsitzfreien Rumpfabstützbereich hinein verlagerten zusätzlichen Fahrzeugführerrumpfabstützeinrichtung in einem Sonderabstützbetriebszustand des Fahrzeugsitzes.

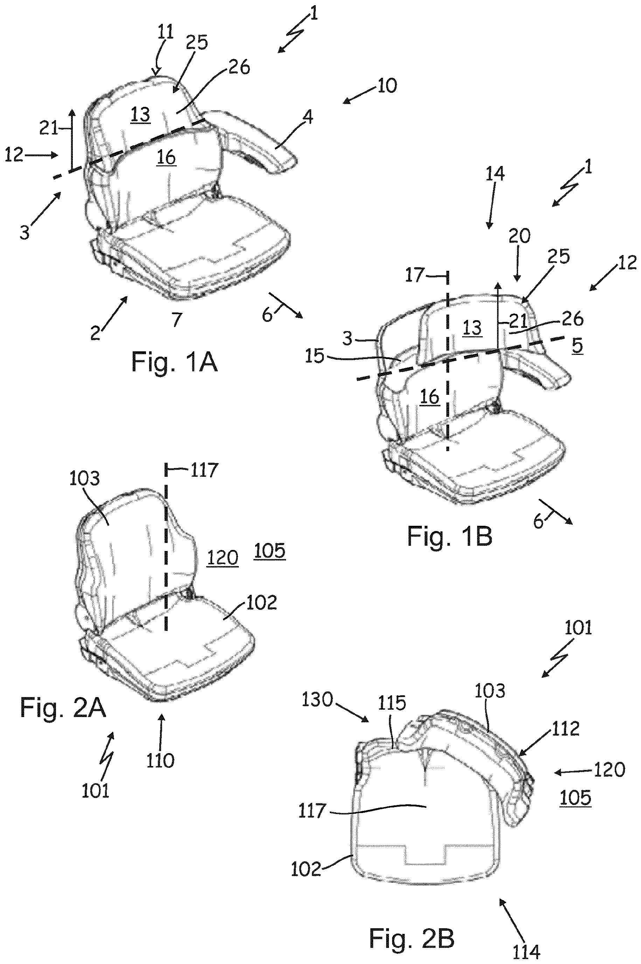

Der in den Figuren 1A und 1B gezeigte erfindungsgemäße Fahrzeugsitz 1 ist in einem hier nicht näher gezeigten landwirtschaftlichen Nutzfahrzeug eingebaut. Der Fahrzeugsitz 1 weist im Wesentlichen ein Sitzteil 2, ein Rückenlehnenteil 3 und eine Armlehneneinrichtung 4 auf, welche an der linken Seite 5 des Fahrzeugsitzes 1 in Vorwärtsfahrtrichtung 6 des landwirtschaftlichen Nutzfahrzeugs gesehen befestigt ist. Der Fahrzeugsitz 1 ist mit seinem Sitzteil 2 unterseitig 7 über eine hier nicht dargestellten Konsole an einem Kabinenboden (hier nicht gezeigt) des landwirtschaftlichen Nutzfahrzeugs befestigt. Gegebenenfalls kann die Konsole eine Federungseinrichtung zum Federn des Fahrzeugsitzes umfassen.

Gemäß der Darstellung der Figur 1A befindet sich der Fahrzeugsitz 1 in einem Normalabstützbetriebszustand 10, in welchem ein hier nicht gezeigter Fahrzeugführer in einer Vorwärtsfahrposition nach vorne blickend auf dem Fahrzeugsitz 1 Platz genommen hat. In diesem Normalabstützbetriebszustand 10 formulieren das Sitzteil 2, das Rücklehnenteil 3 und die Armlehneneinrichtung 4 eine Hauptaußenkontur 11, an welcher der Fahrzeugführer sich abstützen kann.

Erfindungsgemäß stellt der Fahrzeugsitz 1 eine außerhalb des Sitzteils 2, des Rückenlehnenteils 3 und der Armlehneneinrichtung 4 anordenbare zusätzliche Fahrzeugführerrumpfabstützeinrichtung 12 zur Verfügung.

Die zusätzliche Fahrzeugführerrumpfabstützeinrichtung 12 umfasst in diesem ersten Ausführungsbeispiel ein oberes Polsterteilelement 13, welches während eines Sonderabstützbetriebszustand 14 (siehe Figur 1 B) seitlich nach links 5 aus dem Rückenlehnenteil 3 translatorisch entlang einer Kurveneinrichtung 15 (siehe Figur 1 B) heraus bewegt werden kann.

Ein unter dem oberen Polsterteilelement 13 angeordnetes unteres Polsterteilelement 16 ist dagegen gemeinsam mit dem Rückenlehnenteil 3 gegenüber dem Sitzteil 2 im Wesentlichen verdrehfest angeordnet, so dass es im Gegensatz zu der zusätzlichen Fahrzeugführerrumpfabstützeinrichtung 12 nicht um eine Hochachse 17 schwenkbar an dem Rückenlehnenteil 3 gelagert ist.

Die zusätzliche Fahrzeugführerrumpfabstützeinrichtung 12 ist erfindungsgemäß zumindest teilweise in einem ansonsten fahrzeugsitzfreien Rumpfabstützbereich 20 in Höhe eines oberen Rückenlehnenteildrittels 21 oder oberhalb hiervon vor dem Rückenlehnenteil 3 angeordnet, wenn der Sonderabstützbetriebszustand 14 temporär eingestellt ist. Gleichzeitig befindet sich die zusätzliche Fahrzeugführerrumpfabstützeinrichtung 12 seitlich des Rückenlehnenteils 3 und damit auch oberhalb und seitlich des Sitzteils 2.

Insofern kann sich ein auf dem Fahrzeugsitz 1 sitzender Fahrzeugführer während einer seitlich oder rückwärtig ausgerichteten Sitzarbeitshaltung zumindest in Höhe seines Schulterund/oder Brustkorbbereichs außermittig seitlich des Rückenlehnenteils 3 zusätzlich zielgerichtet abzustützen, wodurch er speziell in dieser Zwangshaltung besonders vorteilhaft von der zusätzlichen Fahrzeugführerrumpfabstützeinrichtung 12 gestützt wird. Dies ist bisher nicht möglich.

Die zusätzliche Fahrzeugführerrumpfabstützeinrichtung 12 weist hierzu an einer dem Fahrzeugführer zugewandten Seite 25 eine zusätzliche Anlagefläche 26 im ansonsten fahrzeugsitzfreien Rumpfabstützbereich 20 für den Fahrzeugführer auf.

Eine Bedienung bzw. Aktivierung der zusätzlichen Fahrzeugführerrumpfabstützeinrichtung 12 erfolgt hierbei automatisch interaktiv mittels einer auf das Rückenlehnenteil 3 ausgeübte Körperkraft und damit vorteilhafter Weise ohne eine zusätzliche händisch initiierte Bedienelementeauslösung.

Neben der vorstehend beschriebenen Ausführungsvariante kann das Rückenlehnenteil 3 auch anders aufgeteilt sein, um die zusätzliche Fahrzeugführerrumpfabstützeinrichtung 12 vorteilhaft auszugestalten. Beispielsweise weist ein diesbezügliches alternatives Rückenlehnteil 3 eine zusätzliche Fahrzeugführerrumpfabstützeinrichtung 12 auf, bei welcher mehrere Rückenpolsterteilelemente (hier nicht gezeigt) segmentweise zueinander verlagerbar an dem Rückenlehnenteil 3 gehalten sind, etwa vier Rückenpolsterteilelemente, beispielsweise links oben, links unten sowie rechts oben und rechts unten, welche idealerweise variabel zueinander ihre Positionen gegenüber dem Rückenlehnenteil 3 ändern können. Derartige variabel verschiebbare Rückenpolsterteilelemente einer zusätzlichen Fahrzeugführerrumpfabstützeinrichtung 12 können auch nahezu jede andere Teilung eines Rückenpolsterteils 3 realisieren. Beispielsweise kann eine derartige Teilung auch schräg, vertikal oder in anderen Höhenlagen am Rückenlehnenteil 3 erfolgen. Darüber hinaus kann auch nur ein Teilbereich aus der Mitte des Rückenpolsterteils als zusätzliche Fahrzeugführerrumpfabstützeinrichtung 12 im Sinne der Erfindung verlagert werden. Ein oberes und unteres Rückpolsterteil bleiben ortsfest an dem Rückenlehnenteil 3 stehen.

Bei dem in den Figuren 2A und 2B gezeigten, jedoch nicht zur Erfindung gehörenden Fahrzeugsitz 101 für ein landwirtschaftliches Nutzfahrzeug (hier nicht gezeigt) ist ein Rückenlehnenteil 103 vorteilhafter Weise vollständig um eine Hochachse 117 gegenüber einem Sitzteil 102 nach links 105 außen verschwenkbar an einer Kurveneinrichtung 115 gelagert, so dass einem Fahrzeugführer in einem Sonderabstützbetriebszustand 114 (siehe Figur 2B) des Fahrzeugsitzes 1 gegenüber einem bisher üblichen Normalabstützbetriebszustand 110 (siehe Figur 2A) des Fahrzeugsitzes 1 eine besonders großflächige zusätzliche Fahrzeugführerrumpfabstützeinrichtung 112 in einem ansonsten fahrzeugsitzfreien Rumpfabstützbereich 120 unterstützend zur Verfügung stehen kann. Durch einen hierbei nun freigewordenen Sichtbereich 130 wird zudem ein besonders guter Blick nach hinten beispielsweise auf nachgeschleppte Arbeitsgeräte möglich, welche an einem landwirtschaftlichen Nutzfahrzeug angehängt sind. Bei dieser nicht beanspruchten Ausführungsvariante kann ein variabel verschiebbares gesamtes Rückenlehnenteil 3 oder auch nur ein gesamtes Polsterteilelement 131 hiervon als zusätzliche Fahrzeugführerrumpfabstützeinrichtung 112 zur Verfügung gestellt werden. Eine Bedienung erfolgt vorzugsweise automatisch lediglich mittels Körperkraft ohne eine Bedienelementauslösung oder bedarfsweise etwa auf Kundenwunsch alternativ auch aufgrund einer händisch zu betätigen Bedienelementauslösung. Denkbar wäre auch eine Lösung, bei welcher ein Rückenlehnenteil drehbar gelagert und zusätzlich in der Längsebene flexibel gestaltet ist, wodurch es sich automatisch an die Bewegung und Kontur des Rückens des Fahrzeugführers anpassen kann.

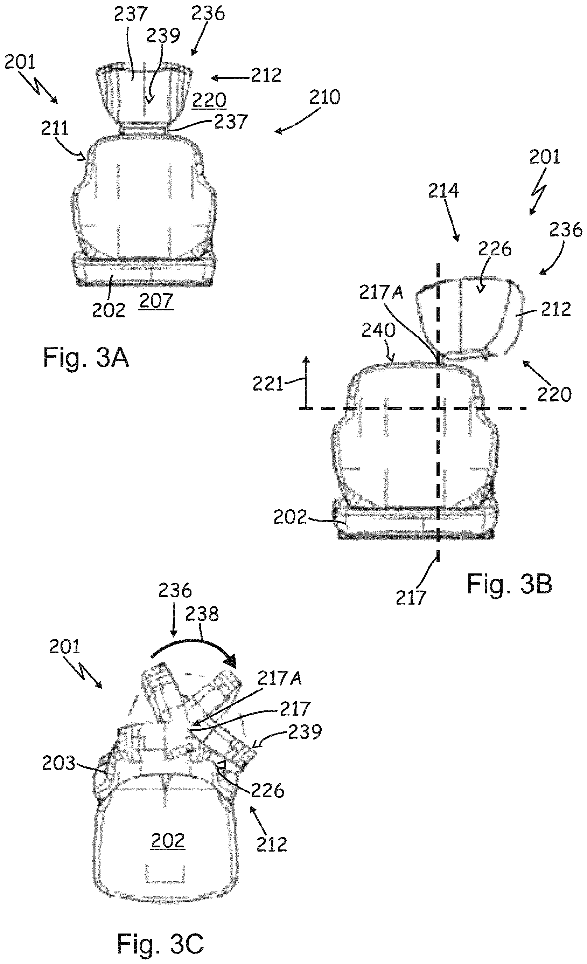

Der in den Figuren 3A bis 3C illustrierte Fahrzeugsitz 201 umfasst im Wesentlichen wieder ein Sitzteil 202 und ein Rückenlehnenteil 203. Darüber hinaus ist oberseitig 235 des Rückenlehnenteils 203 eine Rückenlehnenverlängerungseinrichtung 236 in Gestalt einer Rückenabstützeinrichtung 237 vorhanden. Der Fahrzeugsitz 201 ist mit seinem Sitzteil 202 unterseitig 207 des Fahrzeugsitzes 201 über eine hier nicht dargestellte, gegebenenfalls gefederte Konsole an einem Kabinenboden eines landwirtschaftlichen Nutzfahrzeugs (hier nicht gezeigt) befestigt.

Gemäß der Darstellung der Figur 3A ist der Fahrzeugsitz 201 in einem Normalabstützbetriebszustand 210 gezeigt, in welchem ein hier nicht gezeigter Fahrzeugführer in einer Vorwärtsfahrposition nach vorne blickend auf dem Fahrzeugsitz 201 sitzt. In dem Normalabstützbetriebszustand 210 gestalten im Wesentlichen das Sitzteil 202 und das Rücklehnenteil 203 eine Hauptaußenkontur 211 des Fahrzeugsitzes 201 aus, an welcher sich der Fahrzeugführer abstützen kann.

Erfindungsgemäß ist der Fahrzeugsitz 201 mit einer außerhalb der Hauptaußenkontur 211 anordenbaren zusätzlichen Fahrzeugführerrumpfabstützeinrichtung 212 ausgerüstet, welche in diesem Ausführungsbeispiel durch die Rückenlehnenverlängerungseinrichtung 236 realisiert ist.

Die Rückenlehnenverlängerungseinrichtung 236 ist schwenkbar insbesondere an einem Drehhalterungselement 217A an dem Rückenlehnenteil 203 gelagert, so dass sie um eine Hochachse 217 schwenkbar gegenüber dem Rückenlehnenteil 203 gelagert ist.

Insbesondere anhand der Darstellung nach der Figur 3C ist sehr gut zu erkennen, wie eine Schwenkbewegung entlang eines Verstellweges 238 der zusätzlichen Fahrzeugführerrumpfabstützeinrichtung 212 von dem Normalabstützbetriebszustand 210 um die Hochachse 217 zu dem Sonderabstützbetriebszustand 214 hin erfolgt.

Die Rückenlehnenverlängerungseinrichtung 236 weist in ihrer Funktion als zusätzliche Fahrzeugführerrumpfabstützeinrichtung 212 eine zusätzliche Anlagefläche 226 auf, die im Normalabstützbetriebszustand 210 rückseitig des Rückenlehnenteils 203 angeordnet ist. Im Sonderabstützbetriebszustand 214 des Fahrzeugsitzes 201 ist sie hingegen dem Fahrzeugführer zugewandt. Genau umgekehrt verhält es sich hinsichtlich einer Rückenanlagefläche 239. Die Rückenlehnenverlängerungseinrichtung 236 weist in ihrer Funktion als Rückenabstützeinrichtung 237 im Normalabstützbetriebszustand 210 eine dem Fahrzeugführer zugewandte Rückenanlagefläche 239 auf. Hierbei ist die zusätzliche Anlagefläche 226 an der Rückseite des Rückenlehnenteils 203 angeordnet und somit von dem Fahrzeugführer abgewandt.

Die zusätzliche Fahrzeugführerrumpfabstützeinrichtung 212 ist in dem Sonderabstützbetriebszustand 214 erfindungsgemäß zumindest teilweise in einem ansonsten fahrzeugsitzfreien Rumpfabstützbereich 220 oberhalb eines oberen Rückenlehnenteildrittels 221 vor dem Rückenlehnenteil 203 und seitlich des Rückenlehnenteils 203 angeordnet. Gleichzeitig befindet sich die zusätzliche Fahrzeugführerrumpfabstützeinrichtung 212 zumindest teilweise seitlich des Rückenlehnenteils 203 und damit auch oberhalb und seitlich des Sitzteils 202. Insofern kann sich ein auf dem Fahrzeugsitz 201 sitzender Fahrzeugführer während einer seitlich oder rückwärtig ausgerichteten Sitzarbeitshaltung zumindest in Höhe seines Schulterbereichs außermittig seitlich des Rückenlehnenteils 201 zusätzlich zielgerichtet abzustützen, wodurch er speziell in dieser Zwangshaltung besonders vorteilhaft von der zusätzlichen Fahrzeugführerrumpfabstützeinrichtung 212 gestützt wird.

Eine Bedienung bzw. Aktivierung der zusätzlichen Fahrzeugführerrumpfabstützeinrichtung 212 erfolgt auch hier automatisch interaktiv mittels einer auf das Rückenlehnenteil 203 oder auf die verdrehbare Rückenverlängerungseinrichtung 236 ausgeübten Körperkraft und damit vorteilhafter Weise ohne eine zusätzliche händisch initiierte Bedienelementeauslösung. Mittels der verdrehbaren Rückenverlängerungseinrichtung 236 können vorteilhafter Weise zwei Abstützkonturen, nämlich einerseits die Rückenanlagefläche 239 und andererseits die zusätzliche Anlagefläche 226, zur optimalen Konturanpassung in den beiden Abstützbetriebszuständen 210 und 214 bereitgestellt werden. In dem Normalbetriebszustand 210 hat der Fahrzeugführer eine optimale Rückenunterstützung. Beim seitlich verdrehten Sitzen wird die Rückenverlängerungseinrichtung 236 als zusätzliche Fahrzeugführerrumpfabstützeinrichtung 212 in diesem Ausführungsbeispiel mit dem Ellbogen nach hinten geklappt, dreht hierbei über das linke Drehhalterungselement 217A (siehe Figur 3C) und klappt seitlich des Rückenlehnenteils 203 wieder nach vorne in den ansonsten fahrzeugsitzfreien Rumpfabstützbereich 220 (siehe insbesondere Figur 3B) hinein. Die Rückenverlängerungseinrichtung 236 wird hier über einen Armdruck seitlich entriegelt und mittels einer Federkraft ca. um 180° entlang des Verstellweges 238 geschwenkt. Danach folgen gerastete Einstellungsmöglichkeiten bis ca. 240°. Mit einem Überhub von ca. 270° fällt die zusätzliche Fahrzeugführerrumpfabstützeinrichtung 212 wieder in ihre Rückenabstützfunktion zurück.

Eine Bedienung der zusätzlichen Fahrzeugführerrumpfabstützeinrichtung 212 kann auch mittels Bedienelemente erfolgen, welche idealerweise in einer linken Armlehneneinrichtung (hier nicht gezeigt) angeordnet sind. Das Verschwenken der Rückenverlängerungseinrichtung 236 als zusätzliche Fahrzeugführerrumpfabstützeinrichtung 212 erlaubt vorteilhafter Weise gleichzeitig eine Nutzung einer komfortoptimierten hinteren Armauflageeinrichtung 240 im nun freien Bereich des Rückenlehnenteils 203 (siehe Figur 3B).

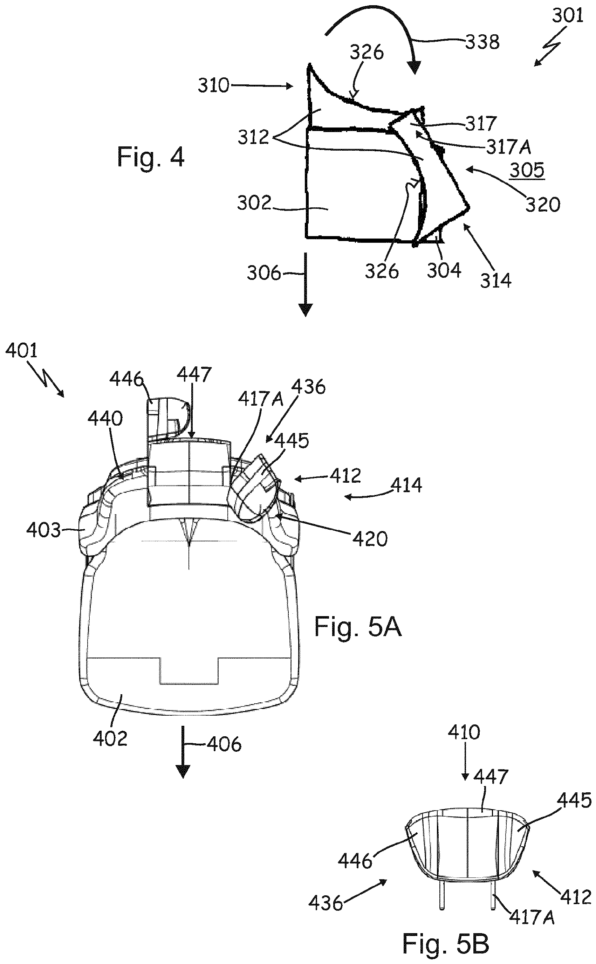

Der in der Figur 4 gezeigte, aber nicht zur Erfindung gehörende Fahrzeugsitz 301 für ein landwirtschaftliches Nutzfahrzeug (hier nicht gezeigt) weist ein Sitzteil 302, ein nicht dargestelltes Rückenlehnenteil und eine Armlehneneinrichtung 304 auf, die in Bezug auf die Vorwärtsfahrtrichtung 306 links 305 außen seitlich an dem Rückenlehnenteil angeordnet ist.

Der Fahrzeugsitz 301 umfasst eine zusätzliche Fahrzeugführerrumpfabstützeinrichtung 312, welche an dem Rückenlehnenteil drehbar um eine Hochachse 317 befestigt ist. Die zusätzliche Fahrzeugführerrumpfabstützeinrichtung 312 ist hierbei in einem Normalabstützbetriebszustand 310 hinter dem Sitzteil 302 angeordnet. In einem Sonderabstützbetriebszustand 314 ist die zusätzliche Fahrzeugführerrumpfabstützeinrichtung 312 vorteilhafter Weise in einen ansonsten fahrzeugsitzfreien Abstützbereich 320 verlagert, um auch hier wieder vorteilhaft einen auf dem Fahrzeugsitz 301 sitzenden Fahrzeugführer (hier nicht gezeigt) während einer seitlich oder rückwärtig ausgerichteten Sitzarbeitshaltung zumindest in Höhe seines Schulterbereichs außermittig links 305 außen und zwar seitlich des Sitzteils 302 abzustützen.

Hierzu ist die zusätzliche Fahrzeugführerrumpfabstützeinrichtung 312 entlang des Verstellweges 338 von dem Normalabstützbetriebszustand 310 in den Sonderabstützbetriebszustand 314 überführt worden. Hierzu wird die zusätzliche Fahrzeugführerrumpfabstützeinrichtung 312 beim seitlich verdrehten Sitzen auch hier mit dem Ellbogen nach hinten geklappt, dreht hierbei über ein linkes Drehhalterungselement 337 und klappt seitlich des Rückenlehnenteils wieder nach vorne in den ansonsten fahrzeugsitzfreien Rumpfabstützbereich 320 hinein. Die zusätzliche Fahrzeugführerrumpfabstützeinrichtung 312 wird hier über einen Armdruck seitlich entriegelt und mittels einer Federkraft ca. um 180°entlang eines Verstellweges 338 geschwenkt. Danach folgen gerastete Einstellungsmöglichkeiten bis ca. 240°. Mit einem Überhub von ca. 270° fällt die zusätzliche Fahrzeugführerrumpfabstützeinrichtung 312 wieder in ihre Parkposition zurück.

Auch der in den Figuren 5A und 5B dargestellte Fahrzeugsitz 401 für ein landwirtschaftliches Nutzfahrzeug (hier nicht gezeigt) weist ein Sitzteil 402, ein Rückenlehnenteil 403 und eine Rückenlehnenverlängerungseinrichtung 436 auf. Darüber hinaus gestaltet die Rückenlehnenverlängerungseinrichtung 436 eine zusätzliche Fahrzeugführerrumpfabstützeinrichtung 412 mit zwei Flügelelementen 445 und 446 aus.

Die zwei Flügelelemente 445 und 446 fluchten erfindungsgemäß im Normalabstützungsbetriebszustand 410 (siehe Figur 5B) des Fahrzeugsitzes 401 mit einem Mittelelement 447 der Rückenlehnenverlängerungseinrichtung 436, während sie in einem Sonderabstützbetriebszustand 414 des Fahrzeugsitzes 401 von diesem in unterschiedlicher Weise abgeklappt sind.

Hierbei ist das in Bezug auf eine Vorwärtsfahrtrichtung 406 linke Flügelelement 445 an einem linken Drehhalterungselement 417A in Vorwärtsfahrrichtung 406 nach vorne geklappt, so dass es zumindest teilweise in einem ansonsten fahrzeugsitzfreien Rumpfabstützbereich 420 oberhalb eines oberen Rückenlehnenteildrittels (hier nicht explizit beziffert) vor dem Rückenlehnenteil 403 angeordnet ist. Insofern kann sich ein auf dem Fahrzeugsitz 401 sitzender Fahrzeugführer während einer seitlich oder rückwärtig ausgerichteten Sitzarbeitshaltung außermittig seitlich des Rückenlehnenteils 401 zusätzlich zielgerichtet abzustützen, wodurch er speziell in dieser Zwangshaltung besonders vorteilhaft von der zusätzlichen Fahrzeugführerrumpfabstützeinrichtung 412 gestützt wird. Das rechte Flügelelement 446 ist hingegen nach hinten geklappt, so dass an der rechten Seite des Fahrzeugsitzes der Blick nach hinten erleichtert ist und eine hintere Armauflageeinrichtung 440 geschaffen wird.

Die Betätigung der zusätzlichen Fahrzeugführerrumpfabstützeinrichtung 412 erfolgt bei einer rückwärtig ausgerichteten Körperhaltung des Fahrzeugführers mittels des Ellbogens, welcher sich beim Umdrehen, beispielsweise beim Rückwärtsfahren, mit nach hinten bewegt wird. Mit dem Ellbogen wird das rechte Flügelelement 446 nach hinten weggedrückt, gleichzeitig wird über ein mechanisches Verbindungsgestänge (hier nicht gezeigt) das linke Flügelelement 445 nach vorne bewegt.

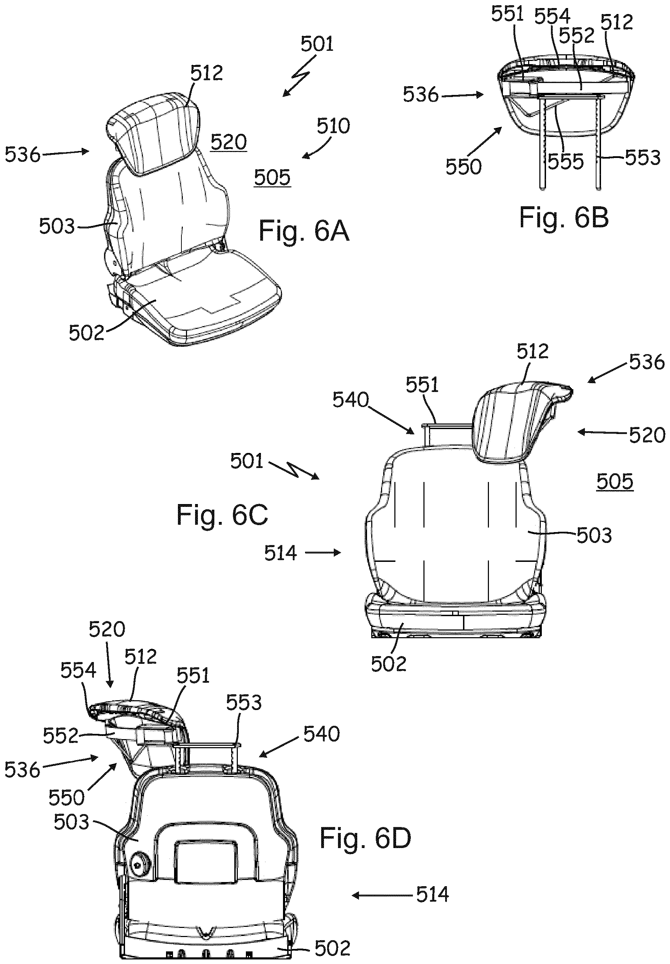

Der in den Figuren 6A bis 6D gezeigte weitere beanspruchte Fahrzeugsitz 501 ist in einem hier nicht näher gezeigten landwirtschaftlichen Nutzfahrzeug eingebaut und er umfasst im Wesentlichen ein Sitzteil 502, ein Rückenlehnenteil 503 und eine Rückenlehnenverlängerungseinrichtung 536.

In der Darstellung nach der Figur 6A ist der Fahrzeugsitz 501 in einem Normalabstützbetriebszustand 510 und in den Darstellungen nach den Figuren 6C und 6D jeweils in einem Sonderabstützbetriebszustand 514 gezeigt.

Erfindungsgemäß stellt der Fahrzeugsitz 1 eine zusätzliche Fahrzeugführerrumpfabstützeinrichtung 512 zur Verfügung, die nach links 505 außen in einen ansonsten fahrzeugfreien Rumpfabstützbereich 520 translatorisch verschoben werden kann, um dort einen auf dem Fahrzeugsitz 1 sitzenden Fahrzeugführer während einer seitlich oder rückwärtig ausgerichteten Sitzarbeitshaltung außermittig seitlich des Rückenlehnenteils 501 zusätzlich zielgerichtet abzustützen, wodurch der Fahrzeugführer speziell in dieser Zwangshaltung besonders vorteilhaft von der zusätzlichen Fahrzeugführerrumpfabstützeinrichtung 512 gestützt wird.

Die zusätzliche Fahrzeugführerrumpfabstützeinrichtung 512 weist hierzu eine Verschiebeeinrichtung 550 (siehe insbesondere Figuren 6B und 6D) auf, die eine Rollenhalterungseinrichtung 551 umfasst, an welcher ein biegesteifes Flachbandelement 552 translatorisch zwischen den beiden Abstützbetriebszuständen 510 und 514 verlagert werden kann. Die Rollenhalterungseinrichtung 551 ist hierbei an ein oberseitig des Rückenlehnenteils 503 befestigtes Gestänge 553 angeordnet. Das biegesteife Flachbandelement 552 ist an einem Rahmenteil 554 befestigt.

Darüber hinaus ist an der zusätzlichen Fahrzeugführerrumpfabstützeinrichtung 512 noch ein Verstärkungselement 555 vorhanden, welches den unteren flexibleren Teil der zusätzlichen Fahrzeugführerrumpfabstützeinrichtung 512 insbesondere im Sonderabstützbetriebszustand 514 (siehe Figuren 6C und 6D) vorteilhaft abstützt.

Eine Betätigung der zusätzlichen Fahrzeugführerrumpfabstützeinrichtung 512 erfolgt hierbei wieder mit einer entsprechenden Ellbogenbewegung des Fahrzeugführers.

Vorteilhafter Weise ergibt sich im Sonderabstützbetriebszustand 514 auch in diesem Ausführungsbeispiel wieder eine zur Verfügung stehende hintere Armauflageeinrichtung 540.

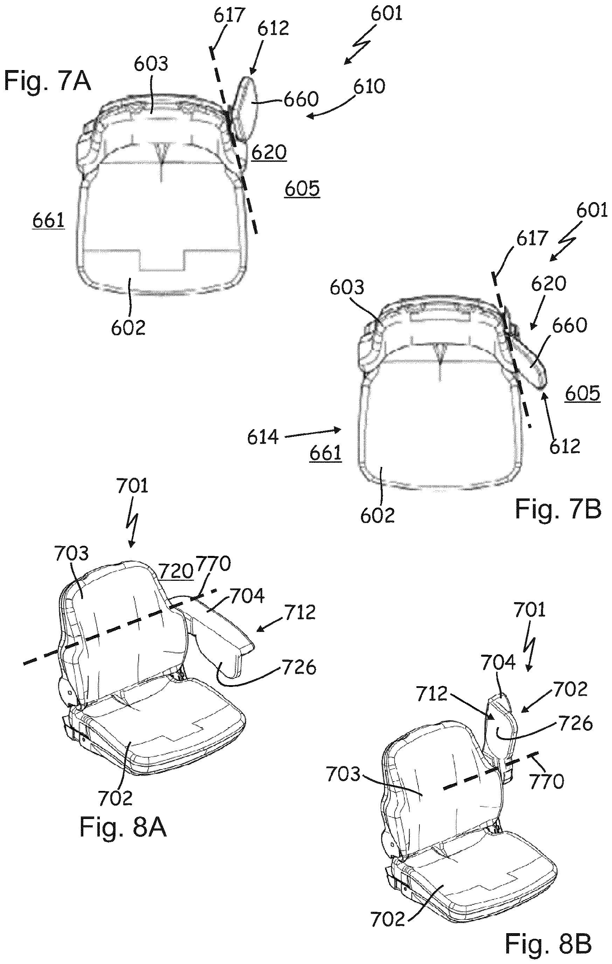

Der in den Figuren 7A und 7B gezeigte und nicht zur Erfindung gehörende Fahrzeugsitz 601 zeichnet sich im Wesentlichen wieder durch ein Sitzteil 602, ein Rückenlehnenteil 603 und eine zusätzliche Fahrzeugführerrumpfabstützeinrichtung 612 aus. Die zusätzliche Fahrzeugführerrumpfabstützeinrichtung 612 ist an der linken Seite 605 an dem Rückenlehnenteil 603 um eine Hochachse 617 drehbar gelagert und als nach hinten wegklappbare Seitenwangeneinrichtung 660 ausgestaltet.

Ist die wegklappbare Seitenwangeneinrichtung 660 derart nach hinten weggeklappt, wie dies in der Darstellung nach Figur 7A gezeigt ist, befindet sich der Fahrzeugsitz 601 in einem Normalabstützbetriebszustand 610. Andernfalls befindet er sich in einem Sonderabstützbetriebszustand 614, in welchem die wegklappbare Seitenwangeneinrichtung 660 nach vorne in einem ansonsten fahrzeugsitzfreien Rumpfabstützbereich 620 hinein verlagert ist (siehe Figur 7B), um eine zusätzliche Rumpfabstützung des Fahrzeugführers in einer rückwärtsgewandten Zwangshaltung vorteilhaft bereitstellen zu können. Ein solches Wegklappen nach hinten kann besonders einfach durch Körperkraft erfolgen. Es kann aber auch ein Bedienelement, idealerweise in einer linken Armlehneneinrichtung (hier nicht gezeigt), zum Wegklappen eingesetzt werden. Das Ausklappen der Seitenwangeneinrichtung 660 nach vorne in den ansonsten fahrzeugsitzfreien Rumpfabstützbereich 620 kann ebenfalls durch ein Bedienelement, idealerweise platziert an der rechten Fahrzeugsitzseite 661 oder rechts an dem Rückenlehnenteil 603, erfolgen. Derartige Bedienelemente können aber auch an jedem anderen denkbaren Ort platziert sein.

Der in den Figuren 8A und 8B illustrierte, nicht zur Erfindung gehörende Fahrzeugsitz 701 besteht im Wesentlichen auch aus einem Sitzteil 702, aus einem Rückenlehnenteil 703 und aus einer Armlehneneinrichtung 704. Die Armlehneneinrichtung 704 weist eine zusätzliche Anlagefläche 726 auf und realisiert somit auch eine zusätzliche Fahrzeugführerrumpfabstützeinrichtung 712, die in einem ansonsten fahrzeugsitzfreien Bereich 720 hinein verlagert werden kann, wenn die Armlehneneinrichtung 704 hochwärts verlagert wird. An der so am Fahrzeugsitz 701 platzierten zusätzliche Fahrzeugführerrumpfabstützeinrichtung 712 kann sich ein Fahrzeugführer sehr gut auch dauerhaft abstützten, wenn er sich in einer Zwangshaltung befindet, wie vorstehend schon vielfach beschrieben ist. Die zusätzliche Fahrzeugführerrumpfabstützeinrichtung 712 wird hierbei um eine Horizontalachse 770 gedreht.

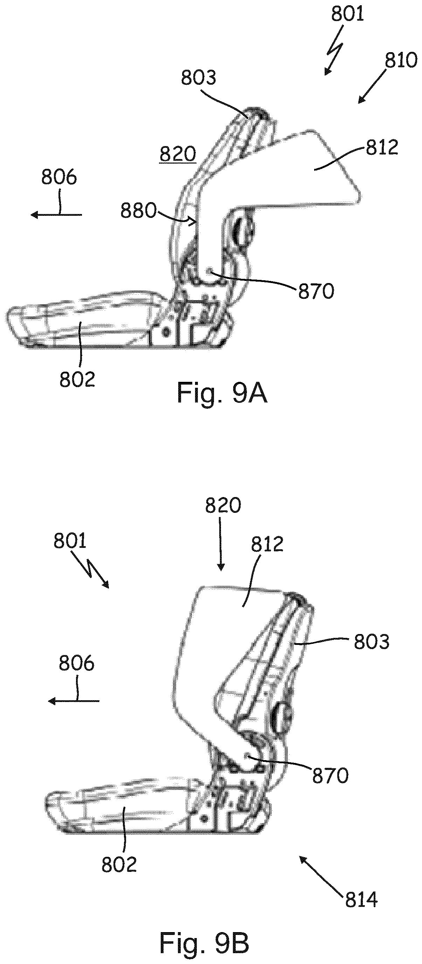

Der in den Figuren 9A und 9B dargestellte alternative, nicht zur Erfindung gehörende Fahrzeugsitz 801, weist ein Sitzteil 802 und ein Rückenlehnenteil 803 auf. An dem Rückenlehnenteil 803 ist seitlich eine zusätzliche Fahrzeugführerrumpfabstützeinrichtung 812 angeordnet, die in einem Normalabstützbetriebszustand 810 (siehe Figur 9A) zumindest teilweise hinter dem Rückenlehnenteil 803 platziert ist. In einem Sonderabstützbetriebszustand 814 (siehe Figur 9B) befindet sich die zusätzliche Fahrzeugführerrumpfabstützeinrichtung 812 größtenteils in einem ansonsten fahrzeugsitzfreien Rumpfabstützbereich 820. Somit kann die zusätzliche Fahrzeugführerrumpfabstützeinrichtung 812 vorteilhafter Weise einen rückwärtig orientierten Fahrzeugführer im Sinne der Erfindung seitlich zusätzlich sehr gut abstützen. Die zusätzliche Fahrzeugführerrumpfabstützeinrichtung 812 ist hierbei um eine Horizontalachse 870 herum schwenkbar gelagert.

Eine Betätigung dieser zusätzlichen Fahrzeugführerrumpfabstützeinrichtung 812 kann etwa durch Antippen eines Bedienelements (hier nicht gezeigt) an der Unterseite 880 der zusätzlichen Fahrzeugführerrumpfabstützeinrichtung 812 etwa mit dem linken Ellbogen des Fahrzeugführers erfolgen, so dass hierauf die zusätzliche Fahrzeugführerrumpfabstützeinrichtung 812 in Vorwärtsfahrtrichtung 806 nach vorne klappt. Durch manuelles Wegschieben der zusätzlichen Fahrzeugführerrumpfabstützeinrichtung 812 mit dem linken Ellbogen klappt sie wieder nach hinten und rastet dort fest, aber lösbar wieder ein.

Es versteht sich, dass auch andere Lösungen, wie beispielsweise elektrische, hydraulische, oder pneumatische Antriebseinrichtungen mit entsprechenden Bedienelementen zum Auslösen der Antriebseinrichtungen, vorteilhaft vorgesehen sein können, um die zusätzliche Fahrzeugführerrumpfabstützeinrichtung 812 anzutreiben.

Alle vorstehend beschriebenen Ausführungsbeispiele können als mechanische, elektrische, hydraulische oder pneumatische Varianten vorteilhaft ausgeführt werden. Beispielsweise können bei mechanischen Varianten unterschiedlichste Mechaniken mit Schienenführungseinrichtungen, Zahnrädereinrichtungen, Kulisseneinrichtungen oder dergleichen in Betracht kommen. Konstruktiv vorteilhaft sind auch gleitfähige Schichtelemente, welche eine relative Verschiebung zweier Bauteileinrichtungen zueinander sehr flach bauend ermöglichen, und welche beispielsweise über Vertiefungselemente, in die eine zusätzliche Fahrzeugführerrumpfabstützeinrichtung mit einem Rastelement rutschen kann, die jeweilige Endposition in einem Normalabstützbetriebszustand eines Fahrzeugsitzes oder in einem Sonderabstützbetriebszustand des Fahrzeugsitzes halten. Es kann sowohl eine automatische Verlagerung der zusätzlichen Fahrzeugführerrumpfabstützeinrichtung anhand einer vorzugsweisen bewussten Körperbewegung eines Fahrzeugführers erfolgen als auch eine Verlagerung aufgrund einer Bedienelementbetätigung. Letztere kann hierbei unterschiedlichster Natur sein, etwa elektrisch, hydraulisch usw.

Es versteht sich, dass es sich bei den vorstehend erläuterten beanspruchten Ausführungsbeispielen lediglich um Ausgestaltungen des erfindungsgemäßen Fahrzeugsitzes handelt. Insofern beschränkt sich die Ausgestaltung der Erfindung nicht auf diese Ausführungsbeispiele.

### Bezugszeichenliste

- 1: Fahrzeugsitz
- 2: Sitzteil
- 3: Rückenlehnenteil
- 4: Armlehneneinrichtung
- 5: linke Seite
- 6: Vorwärtsfahrtrichtung
- 7: unterseitig
- 10: Normalabstützbetriebszustand
- 11: Hauptaußenkontur
- 12: zusätzliche Fahrzeugführerrumpfabstützeinrichtung
- 13: oberes Polsterteilelement
- 14: Sonderabstützbetriebszustand
- 15: Kurveneinrichtung
- 16: unteres Polsterteilelement
- 17: Hochachse
- 20: ansonsten fahrzeugsitzfreier Rumpfabstützbereich
- 21: oberes Rückenlehnenteildrittel
- 25: zugewandte Seite
- 26: zusätzliche Anlagefläche

- 101: Fahrzeugsitz
- 102: Sitzteil
- 103: Rückenlehnenteil
- 105: linke Seite
- 110: Normalabstützbetriebszustand
- 112: zusätzliche Fahrzeugführerrumpfabstützeinrichtung
- 114: Sonderabstützbetriebszustand
- 115: Kurveneinrichtung
- 117: Hochachse
- 120: ansonsten fahrzeugsitzfreier Rumpfabstützbereich
- 130: freigewordener Sichtbereich

- 201: Fahrzeugsitz
- 202: Sitzteil
- 203: Rückenlehnenteil
- 207: unterseitig
- 210: Normalabstützbetriebszustand
- 211: Hauptaußenkontur
- 212: zusätzliche Fahrzeugführerrumpfabstützeinrichtung
- 214: Sonderabstützbetriebszustand
- 217: Hochachse
- 217A: Drehhalterungselement
- 220: ansonsten fahrzeugsitzfreier Rumpfabstützbereich
- 221: oberes Rückenlehnenteildrittel
- 226: zusätzliche Anlagefläche
- 235: oberseitig
- 236: Rückenlehnenverlängerungseinrichtung
- 237: Rückenabstützeinrichtung
- 238: Verstellweg
- 239: Rückenanlagefläche
- 240: hintere Armauflageeinrichtung

- 301: Fahrzeugsitz
- 302: Sitzteil
- 304: Armlehneneinrichtung
- 305: linke Seite
- 306: Vorwärtsfahrtrichtung
- 310: Normalabstützbetriebszustand
- 312: zusätzliche Fahrzeugführerrumpfabstützeinrichtung
- 314: Sonderabstützbetriebszustand
- 317: Hochachse
- 317A: Drehhalterungselement
- 320: ansonsten fahrzeugsitzfreier Rumpfabstützbereich
- 326: zusätzliche Anlagefläche
- 337: Drehalterungselement
- 338: Verstellweg
- 401: Fahrzeugsitz
- 402: Sitzteil
- 403: Rückenlehnenteil
- 410: Normalabstützbetriebszustand
- 412: zusätzliche Fahrzeugführerrumpfabstützeinrichtung
- 414: Sonderabstützbetriebszustand
- 417A: Drehhalterungselement
- 420: ansonsten fahrzeugsitzfreier Rumpfabstützbereich
- 436: Rückenlehnenverlängerungseinrichtung
- 440: hintere Armauflageeinrichtung
- 445: linkes Flügelelement
- 446: rechtes Flügelelement
- 447: Mittelelement

- 501: Fahrzeugsitz
- 502: Sitzteil
- 503: Rückenlehnenteil
- 510: Normalabstützbetriebszustand
- 505: links
- 512: zusätzliche Fahrzeugführerrumpfabstützeinrichtung
- 514: Sonderabstützbetriebszustand
- 520: ansonsten fahrzeugsitzfreier Rumpfabstützbereich
- 536: Rückenlehnenverlängerungseinrichtung
- 540: hintere Armauflageeinrichtung
- 550: Verschiebeeinrichtung
- 551: Rollenhalterungseinrichtung
- 552: biegesteifes Flachbandelement
- 553: Gestänge
- 554: Rahmenteil
- 555: Verstärkungselement

- 601: Fahrzeugsitz
- 602: Sitzteil
- 603: Rückenlehnenteil
- 605: linke Seite
- 610: Normalabstützbetriebszustand
- 612: zusätzliche Fahrzeugführerrumpfabstützeinrichtung
- 614: Sonderabstützbetriebszustand
- 617: Hochachse
- 620: ansonsten fahrzeugsitzfreier Rumpfabstützbereich
- 660: Seitenwangeneinrichtung
- 661: rechten Fahrzeugsitzseite

- 701: Fahrzeugsitz
- 702: Sitzteil
- 703: Rückenlehnenteil
- 704: Armlehneneinrichtung
- 712: zusätzliche Fahrzeugführerrumpfabstützeinrichtung
- 720: ansonsten fahrzeugsitzfreier Rumpfabstützbereich
- 726: zusätzliche Anlagefläche
- 770: Horizontalachse

- 801: Fahrzeugsitz
- 802: Sitzteil
- 803: Rückenlehnenteil
- 806: Vorwärtsfahrtrichtung
- 810: Normalabstützbetriebszustand
- 812: zusätzliche Fahrzeugführerrumpfabstützeinrichtung
- 814: Sonderabstützbetriebszustand
- 820: ansonsten fahrzeugsitzfreier Rumpfabstützbereich
- 870: Horizontalachse
- 880: Unterseite

## Patentansprüche

1. Fahrzeugsitz (1) mit einem Sitzteil (2) und mit einem Rückenlehnenteil (3) zum Stützen eines Fahrzeugführers in seiner Sitzposition auf dem Fahrzeugsitz (1),
**gekennzeichnet durch**
eine außerhalb des Sitzteils (2) und des Rückenlehnenteils (3) anordenbare zusätzliche Fahrzeugführerrumpfabstützeinrichtung (12), welche zumindest teilweise in einem ansonsten fahrzeugsitzfreien Rumpfabstützbereich (20) in Höhe eines oberen Rückenlehnenteildrittels (21) oder oberhalb hiervon vor dem Rückenlehnenteil (3) und außermittig seitlich am Rückenlehnenteil (3) temporär anordenbar ist, um den auf dem Fahrzeugsitz (1) sitzenden Fahrzeugführer während einer seitlich oder rückwärtig ausgerichteten Sitzarbeitshaltung zumindest in Höhe seines Schulter- und/oder Brustkorbbereichs außermittig seitlich des Rückenlehnenteils (3) abzustützen, wobei die zusätzliche Fahrzeugführerrumpfabstützeinrichtung (12) mit einer Verlagerungseinrichtung von einer Parkposition in eine zusätzliche Rumpfabstützlage in dem ansonsten fahrzeugsitzfreien Rumpfabstützbereich (20) translatorisch entlang einer Kurveneinrichtung (15) verlagerbar angeordnet ist.

2. Fahrzeugsitz (1) mit einem Sitzteil (202) und mit einem Rückenlehnenteil (203) zum Stützen eines Fahrzeugführers in seiner Sitzposition auf dem Fahrzeugsitz (201),
**gekennzeichnet durch**
eine außerhalb des Sitzteils (202) und des Rückenlehnenteils (203) anordenbare zusätzliche Fahrzeugführerrumpfabstützeinrichtung (212), welche zumindest teilweise in einem ansonsten fahrzeugsitzfreien Rumpfabstützbereich (220) oberhalb eines oberen Rückenlehnenteildrittels (221) vor dem Rückenlehenenteil (203) und seitlich des Rückenlehenteils (203) temporär anordenbar ist, um den auf dem Fahrzeugsitz (1) sitzenden Fahrzeugführer während einer seitlich oder rückwärtig ausgerichteten Sitzarbeitshaltung zumindest in Höhe seines Schulter- und/oder Brustkorbbereichs außermittig seitlich des Rückenlehnenteils (3) abzustützen, wobei die zusätzliche Fahrzeugführerrumpfabstützung mit einer Verlagerungseinrichtung von einer Parkposition in eine zusätzliche Rumpfabstützlage in dem ansonsten fahrzeugsitzfreien Rumpfabstützbereich (20) verlagerbar angeordnet ist, wobei die Fahrzeugführerrumpfabstützeinrichtung (212) schwenkbar um eine Hochachse (217) gegenüber dem Rückenlehnenteil (203) gelagert ist.

3. Fahrzeugsitz (401) mit einem Sitzteil (402) und mit einem Rückenlehnenteil (403) zum Stützen eines Fahrzeugführers in seiner Sitzposition auf dem Fahrzeugsitz (401),
**gekennzeichnet durch**
eine außerhalb des Sitzteils (402) und des Rückenlehnenteils (403) anordenbare zusätzliche Fahrzeugführerrumpfabstützeinrichtung (412) mit zwei klappbaren Flügelelementen (445, 446), welche zumindest teilweise in einem ansonsten fahrzeugsitzfreien Rumpfabstützbereich (420) oberhalb eines oberen Rückenlehnenteildrittels vor dem Rückenlehenenteil (403) temporär anordenbar sind, um den auf dem Fahrzeugsitz (401) sitzenden Fahrzeugführer während einer seitlich oder rückwärtig ausgerichteten Sitzarbeitshaltung zumindest in Höhe seines Schulter- und/oder Brustkorbbereichs außermittig seitlich des Rückenlehnenteils (403) abzustützen, wobei die Flügelelemente (445, 446) in einem Normalabstützungsbetriebszustand (410) des Fahrzeugsitzes (401) mit einem Mittelelement (447) einer Rückenlehenverlängerungseinrichtung (436) fluchten, wobei sie in einem Sonderabstützbetriebszustand (414) des Fahrzeugsitzes (401) von diesem in unterschiedlicher Weise abgeklappt sind.

4. Fahrzeugsitz (501) mit einem Sitzteil (502) und mit einem Rückenlehnenteil (503) zum Stützen eines Fahrzeugführers in seiner Sitzposition auf dem Fahrzeugsitz (501),
**gekennzeichnet durch**
eine außerhalb des Sitzteils (502) und des Rückenlehnenteils (503) anordenbare zusätzliche Fahrzeugführerrumpfabstützeinrichtung (512), welche zumindest teilweise in einem ansonsten fahrzeugsitzfreien Rumpfabstützbereich (520) in Höhe eines oberen Rückenlehnenteildrittels (521) oder oberhalb hiervon vor dem Rückenlehnenteil (503) und außermittig seitlich am Rückenlehnenteil (503) temporär anordenbar ist, um den auf dem Fahrzeugsitz (501) sitzenden Fahrzeugführer während einer seitlich oder rückwärtig ausgerichteten Sitzarbeitshaltung zumindest in Höhe seines Schulter- und/oder Brustkorbbereichs außermittig seitlich des Rückenlehnenteils (503) abzustützen, wobei die zusätzliche Fahrzeugführerrumpfabstützeinrichtung (512) mit einer Verlagerungseinrichtung von einer Parkposition in eine zusätzliche Rumpfabstützlage in dem ansonsten fahrzeugsitzfreien Rumpfabstützbereich (520) translatorisch entlang einer Verschiebeeinrichtung (550) verlagerbar angeordnet ist.

5. Fahrzeugsitz (1) nach Anspruch 1,
**dadurch gekennzeichnet, dass**
die Verlagerungseinrichtung (15) Mittel zum rotatorischen und translatorischen Verlagern der zusätzliche Fahrzeugführerrumpfabstützeinrichtung (12) aufweist.

6. Fahrzeugsitz (1, 201, 401, 501) nach einem der Ansprüche 1 bis 5,
**dadurch gekennzeichnet, dass**
das Sitzteil (2, 202, 402, 502), das Rückenlehnenteil (3, 203, 403, 503), eine Rückenlehnenverlängerungseinrichtung (236) und/oder eine Armlehneneinrichtung (4) eine Hauptaußenkontur (11) des Fahrzeugsitzes (1, 201, 401, 501) ausgestalten, und die zusätzliche Fahrzeugführerrumpfabstützeinrichtung (12, 212, 412, 512) temporär außerhalb der Hauptaußenkontur (11) anordenbar an dem Rückenlehnenteil (3) gehaltert ist.

7. Fahrzeugsitz (1, 201, 401, 501) nach einem der Ansprüche 1 bis 6,
**dadurch gekennzeichnet, dass**
die zusätzliche Fahrzeugführerrumpfabstützeinrichtung (12, 212, 412, 512) körperhaltungsabhängig interaktiv betätigbar angeordnet ist.

8. Fahrzeugsitz (1, 201, 401, 501) nach einem der Ansprüche 1 bis 7,
**dadurch gekennzeichnet, dass**
der Fahrzeugsitz (1, 201, 401, 501) an dem Rückenlehnenteil (3, 203, 403, 503) eine fahrzeugführerhaltungsabhängige interaktive Betätigungseinrichtung aufweist, wobei die zusätzliche Fahrzeugführerrumpfabstützeinrichtung (12, 212, 412, 512) mittels einer Druckbetätigungseinrichtung an einem Polsterteil (13, 16) des Rückenlehnenteils (3, 203, 403, 503) betätigbar an dem Rückenlehnenteil (3, 203, 403, 503) angeordnet ist.

9. Fahrzeugsitz (1, 201, 401, 501) nach einem der Ansprüche 1 bis 8,
**dadurch gekennzeichnet, dass**
der Fahrzeugsitz (1, 201, 401, 501) neben einem Normalabstützbetriebszustand (10, 210, 410, 510) mindestens einen Sonderabstützbetriebszustand (14, 214, 414, 514) aufweist, in welchem die zusätzliche Fahrzeugführerrumpfabstützeinrichtung (12, 212, 412, 512) einen vor dem Rückenlehnenteil (3, 203, 403, 503) und einen oberhalb und/oder seitlich des Sitzteils (2, 202, 402, 502) liegenden Fahrzeugführerbewegungsfreiraum temporär begrenzend anordenbar ist.

10. Nutzfahrzeug, insbesondere landwirtschaftliches Nutzfahrzeug, mit einem Fahrzeugsitz (1) für einen Fahrzeugführer,
**gekennzeichnet durch**
ein Fahrzeugsitz (1, 201, 401, 501) nach einem der vorhergehenden Ansprüche.

11. Verfahren zum Unterstützen eines Fahrzeugführers auf einem Fahrzeugsitz (1, 201, 401, 501) gemäß einem der Ansprüche 1 bis 9 während einer temporär eingenommenen Fahrarbeitsposition, bei welcher der Fahrzeugführer eine seitlich oder rückwärtig ausgerichtete Sitzhaltung einnimmt bzw. eingenommen hat, bei welchem temporär eine zusätzliche Fahrzeugführerrumpfabstützeinrichtung (12, 212, 412, 512) in die Nähe des Fahrzeugsitzes (1, 201, 401, 501) verlagert wird, um den Fahrzeugführer während seiner seitlich oder rückwärtig ausgerichteten Sitzhaltung zumindest in Höhe seines Schulter- und/oder Brustkorbbereichs seitlich des Rückenlehnenteils (3, 203, 403, 503) abzustützen, und bei welchem hierfür die zusätzliche Fahrzeugführerrumpfabstützeinrichtung (12, 212, 412, 512) aus einer Parkposition heraus in einen ansonsten fahrzeugsitzfreien Rumpfabstützbereich (20, 220, 420, 520) hinein verlagert wird.

12. Verfahren nach Anspruch 11,
**dadurch gekennzeichnet, dass**
die zusätzliche Fahrzeugführerrumpfabstützeinrichtung (12, 212, 412, 512) in Abhängigkeit einer Fahrzeugführerkörperhaltung automatisiert in den ansonsten fahrzeugsitzfreien Rumpfabstützbereich (20, 220, 420, 520) hinein verlagert wird.

## Claims

1. Vehicle seat (1) having a seat part (2) and having a backrest part (3) for supporting a vehicle driver in their seated position on the vehicle seat (1),
**characterised by**
an additional vehicle driver torso support device (12) which can be arranged outside the seat part (2) and the backrest part (3) and which can be temporarily arranged at least in part in an otherwise vehicle-seat-free torso support region (20) at the level of or above a backrest part upper third (21) in front of the backrest part (3) and off-centre on the side of the backrest part (3), in order to provide support, off-centre to the side of the backrest part (3), for the vehicle driver sitting on the vehicle seat (1) at least at the level of their shoulder and/or chest region when said driver assumes a sideways- or rearward-oriented seated working posture, the additional vehicle driver torso support device (12) being arranged so as to be translatable along a curve device (15) by means of a movement device from a parked position to an additional torso support position in the otherwise vehicle-seat-free torso support region (20).

2. Vehicle seat (1) having a seat part (202) and having a backrest part (203) for supporting a vehicle driver in their seated position on the vehicle seat (201),
**characterised by**
an additional vehicle driver torso support device (212) which can be arranged outside the seat part (202) and the backrest part (203) and which can be temporarily arranged at least in part in an otherwise vehicle-seat-free torso support region (220) above a backrest part upper third (221) in front of the backrest part (203) and to the side of the backrest part (203), in order to provide support, off-centre to the side of the backrest part (3), for the vehicle driver sitting on the vehicle seat (1) at least at the level of their shoulder and/or chest region when said driver assumes a sideways- or rearward-oriented seated working posture, the additional vehicle driver torso support device being arranged so as to be movable by means of a movement device from a parked position to an additional torso support position in the otherwise vehicle-seat-free torso support region (20), the vehicle driver torso support device (212) being mounted so as to be pivotable about a vertical axis (217) with respect to the backrest part (203).

3. Vehicle sear (401) having a seat part (402) and having a backrest part (403) for supporting a vehicle driver in their seated position on the vehicle seat (401),
**characterised by**
an additional vehicle driver torso support device (412) that has two hinged flap elements (445, 446), can be arranged outside the seat part (402) and the backrest part (403) and can be temporarily arranged at least in part in an otherwise vehicle-seat-free torso support region (420) above a backrest part upper third in front of the backrest part (403), in order to provide support, off-centre to the side of the backrest part (403), for the vehicle driver sitting on the vehicle seat (401) at least at the level of their shoulder and/or chest region when said driver assumes a sideways- or rearward-oriented seated working posture, the flap elements (445, 446) being aligned with a centre element (447) of a backrest extension device (436) when the vehicle seat (401) is in a normal-support operating state (410), said flap elements being folded away from the vehicle seat (401) in different ways when said seat is in a special-support operating state (414).

4. Vehicle seat (501) having a seat part (502) and having a backrest part (503) for supporting a vehicle driver in their seated position on the vehicle seat (501),
**characterised by**
an additional vehicle driver torso support device (512) which can be arranged outside the seat part (502) and the backrest part (503) and which can be temporarily arranged at least in part in an otherwise vehicle-seat-free torso support region (520) at the level of or above a backrest part upper third (521) in front of the backrest part (503) and off-centre to the side on the backrest part (503), in order to provide support, off-centre to the side of the backrest part (503), for the vehicle driver sitting on the vehicle seat (501) at least at the level of their shoulder and/or chest region when said driver assumes a sideways- or rearward-oriented seated working posture, the additional vehicle driver torso support device (512) being arranged so as to be translatable along a shifting device (550) by means of a movement device from a parked position to an additional torso support position in the otherwise vehicle-seat-free torso support region (520).

5. Vehicle seat (1) according to claim 1,
**characterised in that**
the movement device (15) comprises means for rotating and translating the additional vehicle driver torso support device (12).

6. Vehicle seat (1, 201, 401, 501) according to any of claims 1 to 5,
**characterised in that**
the seat part (2, 202, 402, 502), the backrest part (3, 203, 403, 503), a backrest extension device (236) and/or an armrest device (4) form a main outer contour (11) of the vehicle seat (1, 201, 401, 501), and the additional vehicle driver torso support device (12, 212, 412, 512) is mounted on the backrest part (3) such that it can be arranged temporarily outside of the main outer contour (11).

7. Vehicle seat (1, 201, 401, 501) according to any of claims 1 to 6,
**characterised in that**
the additional vehicle driver torso support device (12, 212, 412, 512) is arranged such that it can be operated interactively according to posture.

8. Vehicle seat (1, 201, 401, 501) according to any of claims 1 to 7,
**characterised in that**
the vehicle seat (1, 201, 401, 501) comprises on the backrest part a device (3, 203, 403, 503) for interactive operation according to the vehicle driver posture, the additional vehicle driver torso support device (12, 212, 412, 512) being arranged on the backrest part (3, 203, 403, 503) such that it can be operated by means of a pressure-operated device on a cushion part (13, 16) of the backrest part (3, 203, 403, 503).

9. Vehicle seat (1, 201, 401, 501) according to any of claims 1 to 8,
**characterised in that**
the vehicle seat (1, 201, 401, 501) comprises, in addition to a normal-support operating state (10, 210, 410, 510), at least one special-support operating state (14, 214, 414, 514), in which the additional vehicle driver torso support device (12, 212, 412, 512) can be arranged so as to temporarily define a vehicle driver movement clearance in front of the backrest part (3, 203, 403, 503) and a vehicle driver movement clearance above and/or to the side of the seat part (2, 202, 402, 502).

10. Commercial vehicle, in particular an agricultural commercial vehicle, having a vehicle seat (1) for a vehicle driver,
**characterised by**
a vehicle seat (1, 201, 401, 501) according to any of the preceding claims.

11. Method for supporting a vehicle driver on a vehicle seat (1, 201, 401, 501) according to any of claims 1 to 9 when the driver temporarily assumes a driving working position in which said vehicle driver assumes or has assumed a sideways- or rearward-oriented seated position, in which method an additional vehicle driver torso support device (12, 212, 412, 512) is temporarily moved to the vicinity of the vehicle seat (1, 201, 401, 501) in order to support the vehicle driver, to the side of the backrest part (3, 203, 403, 503), at least at the level of their shoulder and/or chest region when said driver assumes a sideways- or rearward-oriented seated working position, and in which the additional vehicle driver torso support device (12, 212, 412, 512) is moved from a parked position to an otherwise vehicle-seat-free torso support region (20, 220, 420, 520) for said purpose.

12. Method according to claim 11,
**characterised in that**
the additional vehicle driver torso support device (12, 212, 412, 512) is moved to the otherwise vehicle-seat-free torso support region (20, 220, 420, 520) in an automated manner according to the vehicle driver's posture.

## Revendications

1. Siège de véhicule (1) avec une partie d'assise (2) et une partie de dossier (3) pour l'appui d'un conducteur du véhicule dans sa position assise sur le siège de véhicule (1),
**caractérisé par**
un dispositif supplémentaire de soutien du tronc du conducteur du véhicule (12) pouvant être disposé à l'extérieur de la partie d'assise (2) et de la partie de dossier (3), qui peut être disposé temporairement au moins partiellement dans une zone de soutien du tronc (20) normalement dépourvue de siège de véhicule à la hauteur d'un tiers supérieur de partie de dossier (21) ou au-dessus de celui-ci devant la partie de dossier (3) et de manière excentrée latéralement sur la partie de dossier (3), afin de soutenir le conducteur du véhicule assis sur le siège du véhicule (1) pendant une position de travail assise orientée latéralement ou vers l'arrière au moins à la hauteur de la zone des épaules et/ou de la cage thoracique, de manière excentrée sur le côté de la partie de dossier (3), le dispositif supplémentaire de soutien du tronc du conducteur du véhicule (12) étant disposé de manière mobile en translation, avec un dispositif de déplacement d'une position de stationnement vers une position de soutien du tronc supplémentaire, dans la zone de soutien du tronc (20) normalement dépourvue de siège de véhicule, le long d'un dispositif à courbe (15).

2. Siège de véhicule (1) avec une partie d'assise (202) et avec une partie de dossier (203) pour le soutien d'un conducteur du véhicule dans sa position assise sur le siège de véhicule (201),
**caractérisé par**
un dispositif supplémentaire de soutien du tronc du conducteur du véhicule (212) pouvant être disposé à l'extérieur de la partie d'assise (202) et de la partie de dossier (203), qui peut être disposé temporairement au moins partiellement dans une zone de soutien du tronc (220) normalement dépourvue de siège de véhicule au-dessus d'un tiers supérieur de partie de dossier (221) devant la partie de dossier (203) et sur le côté de la partie de dossier (203), afin de soutenir le conducteur du véhicule assis sur le siège du véhicule (1) pendant une position de travail assise orientée latéralement ou vers l'arrière au moins à la hauteur de la zone des épaules et/ou de la cage thoracique, de manière excentrée sur le côté de la partie de dossier (3), le dispositif supplémentaire de soutien du tronc du conducteur du véhicule étant disposé de manière mobile avec un dispositif de déplacement d'une position de stationnement vers une position de soutien de tronc supplémentaire dans la zone de soutien de tronc (20) normalement dépourvue de siège de véhicule, le dispositif de soutien de tronc du conducteur du véhicule (212) étant logé de manière pivotante autour d'un axe vertical (217) par rapport à la partie de dossier (203).

3. Siège de véhicule (401) avec une partie d'assise (402) et avec une partie de dossier (403) pour le soutien d'un conducteur de véhicule dans sa position assise sur le siège de véhicule (401),
**caractérisé par**
un dispositif supplémentaire de soutien de tronc du conducteur du véhicule (412) pouvant être disposé à l'extérieur de la partie d'assise (402) et de la partie de dossier (403), avec deux éléments d'ailettes rabattables (445, 446), qui peuvent être disposés temporairement au moins partiellement dans une zone de soutien du tronc (420) normalement dépourvue de siège de véhicule au-dessus d'un tiers supérieur de la partie de dossier devant la partie de dossier (403), afin de soutenir le conducteur du véhicule assis sur le siège du véhicule (401) pendant une position de travail assise orientée latéralement ou vers l'arrière au moins à la hauteur de la zone d'épaules et/ou de la cage thoracique, de manière excentrée sur le côté de la partie d'assise (403), les éléments d'ailettes (445, 446) étant alignées, dans un état de fonctionnement de soutien normal (410) du siège de véhicule (401), avec un élément central (447) d'un dispositif de prolongement de dossier (436), moyennant quoi ils sont éloignés, dans un état de fonctionnement de soutien spécial (414) du siège de véhicule (401), de celui-ci d'une manière différente.

4. Siège de véhicule (501) avec une partie d'assise (502) et une partie de dossier (503) pour le soutien d'un conducteur de véhicule dans sa position assise sur le siège de véhicule (501),
**caractérisé par**
un dispositif supplémentaire de soutien du tronc du conducteur du véhicule (512) pouvant être disposé à l'extérieur de la partie d'assise (502) et de la partie de dossier (503), qui peut être disposé temporairement au moins partiellement dans une zone de soutien de tronc (520), normalement dépourvue de siège de véhicule, à la hauteur d'un tiers supérieur de partie de dossier (521) ou au-dessus de celui-ci devant la partie de dossier (503) et de manière excentrée sur le côté de la partie de dossier (503), afin de soutenir le conducteur du véhicule assis sur le siège de véhicule (501) pendant une position de travail assise orientée latéralement ou vers l'arrière au moins à la hauteur de la zone des épaules et/ou de la cage thoracique, de manière excentrée sur le côté de la partie de dossier (503), le dispositif supplémentaire de soutien du tronc du conducteur du véhicule (512) étant disposé de manière mobile en translation, avec un dispositif de déplacement d'une position de stationnement vers une position de soutien de tronc supplémentaire dans la zone de soutien de tronc (520) normalement dépourvue de siège de véhicule, le long d'un dispositif de coulissement (550).

5. Siège de véhicule (1à selon la revendication 1,
**caractérisé en ce que**
le dispositif de déplacement (15) comprend des moyens pour le déplacement en rotation et en translation du dispositif supplémentaire de soutien du tronc du conducteur du véhicule (12).

6. Siège de véhicule (1, 201, 401, 501) selon l'une des revendications 1 à 5,
**caractérisé en ce que**
la partie d'assise (2, 202, 402, 502), la partie de dossier (3, 203, 403, 503), un dispositif de prolongement de dossier (236) et/ou un dispositif d'accoudoir (4) forment un contour extérieur principal (11) du siège de véhicule (1, 201, 401, 501) et le dispositif supplémentaire de soutien du tronc du conducteur du véhicule (12, 212, 412, 512) est maintenu sur la partie de dossier (3) de façon à pouvoir être disposé temporairement à l'extérieur du contour extérieur principal (11).

7. Siège de véhicule (1, 201, 401, 501) selon l'une des revendications 1 à 6,
**caractérisé en ce que**
le dispositif supplémentaire de soutien du tronc du conducteur du véhicule (12, 212, 412, 512) est disposé de façon à pouvoir être actionné de manière interactive en fonction de la position corporelle.

8. Siège de véhicule (1, 201, 401, 501) selon l'une des revendications 1 à 7,
**caractérisé en ce que**
le siège de véhicule (1, 201, 401, 501) comprend, sur la partie de dossier (3, 203, 403, 503), un dispositif d'actionnement interactif en fonction de la position corporelle, le dispositif supplémentaire de soutien du tronc du conducteur du véhicule (12, 212, 412, 512) étant disposé sur la partie de dossier (3, 203, 403, 503), de façon à pouvoir être actionné au moyen d'un dispositif d'actionnement par pression sur une partie de rembourrage (13, 16) de la partie de dossier (3, 203, 403, 503).

9. Siège de véhicule (1, 201, 401, 501) selon l'une des revendications 1 à 8,
**caractérisé en ce que**
le siège de véhicule (1, 201, 401, 501) présente, en plus d'un état de fonctionnement de soutien normal (10, 210, 410, 510), au moins un état de fonctionnement de soutien spécial (14, 214, 414, 514), dans lequel le dispositif supplémentaire de soutien du tronc du conducteur du véhicule (12, 212, 412, 512) peut être disposé temporairement en délimitant un espace libre de mouvement du conducteur du véhicule disposée avant la partie de dossier (3, 203, 403, 503) et un espace libre de mouvement du conducteur du véhicule disposé au-dessus et/ou sur le côté de la partie d'assise (2, 202, 402, 502).

10. Véhicule utilitaire, plus particulièrement véhicule utilitaire agricole, avec un siège de véhicule (1) pour un conducteur de véhicule,
**caractérisé par**
un siège de véhicule (1, 201, 401, 501) selon l'une des revendications précédentes.

11. Procédé de soutien d'un conducteur de véhicule sur un siège de véhicule (1, 201, 401, 501) selon l'une des revendications 1 à 9, pendant une position de travail de conduite adoptée temporairement, dans lequel le conducteur du véhicule adopte ou a adopté une position assise orientée latéralement ou vers l'arrière, dans laquelle un dispositif supplémentaire de soutien de tronc de conducteur de véhicule (12, 212, 412, 512) est temporairement déplacé à proximité du siège du véhicule (1, 201, 401, 501), afin de soutenir le conducteur du véhicule pendant sa position assise orientée latéralement ou vers l'arrière, au moins à la hauteur de la zone des épaules et/ou de la cage thoracique sur le côté de la partie de dossier (3, 203, 403, 503) et dans laquelle, pour cela, le dispositif supplémentaire de soutien de tronc de conducteur de véhicule (12, 212, 412, 512) est déplacé d'une position de stationnement vers une zone de soutien de tronc (20, 220, 420, 520) normalement dépourvue de siège de véhicule.

12. Procédé selon la revendication 11,
**caractérisé en ce que**
le dispositif supplémentaire de soutien de tronc de conducteur de véhicule (12, 212, 412, 512) est déplacé, de manière automatisée, en fonction d'une position corporelle du conducteur du véhicule, vers la zone de soutien de tronc (20, 220, 420, 520) normalement dépourvue de siège de véhicule.
